# EUROPEAN PATENT SPECIFICATION

(11) **EP 3 595 227 B1**
(45) Date of publication and mention of the grant of the patent: **13.10.2021**
(21) Application number: 18845077.9
(22) Date of filing: 10.08.2018
(51) Int. Cl.: H04L 5/00, H04W 4/40

(54) **MULTI-CARRIER-FREQUENCY TRANSMISSION METHOD, AND DEVICE**
MEHRTRÄGER-FREQUENZÜBERTRAGUNGSVERFAHREN, UND -VORRICHTUNG
PROCÉDÉ, ET DISPOSITIF DE TRANSMISSION À FRÉQUENCES PORTEUSES MULTIPLES

(30) Priority: 10.08.2017 CN 201710681955
(43) Date of publication of application: 15.01.2020
(73) Proprietor: Huawei Technologies Co., Ltd., Longgang District Shenzhen, Guangdong 518129 (CN)
(72) Inventor: LI, Mingchao, Shenzhen Guangdong 518129 (CN); LIU, Hang, Shenzhen Guangdong 518129 (CN); WANG, Hejun, Shenzhen Guangdong 518129 (CN); YU, Yinghui, Shenzhen Guangdong 518129 (CN)
(74) Representative: Gill Jennings & Every LLP
(86) International application number: PCT/CN2018/100107
(87) International publication number: WO 2019/029739

(56) References cited:
- WO-A1-2016/163816
- WO-A1-2016/175639
- WO-A1-2017/034324
- CN-A- 102 461 045
- CN-A- 105 830 523
- ZTE: "Considering CA on PC5 carrier", 3GPP DRAFT; R1-1707211 - 6.2.3.1.1 CA ON PC5 CARRIER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou; 20170515 - 20170519 14 May 2017 (2017-05-14), XP051272426, Retrieved from the Internet: URL:http://www.3gpp.org/ftp/Meetings_3GPP_ SYNC/RAN1/Docs/ [retrieved on 2017-05-14]
- QUALCOMM INCORPORATED: "Carrier Aggregation for V2X Phase 2", 3GPP DRAFT; R1-1708786, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou, China; 20170515 - 20170519 14 May 2017 (2017-05-14), XP051273969, Retrieved from the Internet: URL:http://www.3gpp.org/ftp/Meetings_3GPP_ SYNC/RAN1/Docs/ [retrieved on 2017-05-14]
- INTEL CORPORATION: "Sidelink carrier aggregation for LTE V2V communication", 3GPP DRAFT; R1-1707300 INTEL - V2X_SLCA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou; 20170515 - 20170519 7 May 2017 (2017-05-07), XP051262960, Retrieved from the Internet: URL:http://www.3gpp.org/ftp/tsg_ran/WG1_RL 1/TSGR1_89/Docs/ [retrieved on 2017-05-07]
- Qualcomm Incorporated: "Carrier Aggregation for V2X Phase 2", 3GPP TSG RAN WG2 Meeting #99 R2-1708682, 11 August 2017 (2017-08-11), XP051318489,

## Description

### TECHNICAL FIELD

Embodiments of the present invention relate to the field of communications technologies, and in particular, to a multi-carrier based transmission method, a device, and a system.

### BACKGROUND

With continuous development of society, automobiles are becoming more popular. While bringing convenience to people, a driving trip also brings some negative impact on human society, for example, frequent traffic accidents. To reduce an occurrence probability of traffic accidents, currently, vehicles can obtain road condition information or receive information services in time through vehicle to X (vehicle to X, V2X) communication (for example, vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication), for example, obtain information broadcast by another vehicle, such as a vehicle speed, a driving direction, a specific location, and whether an emergency brake is applied, and sense a traffic condition outside a line of sight based on the obtained information, thereby making a prediction and taking a timely avoidance operation for a dangerous condition. In view of this, a related standard is executed in a current mainstream wireless communications technology, namely, long term evolution (long term evolution, LTE), for a V2X service feature and transmission requirement, to support LTE-based V2X direct communication.

However, with development of technologies such as automated driving, a vehicle not only can exchange, with surrounding vehicles, people, or infrastructures through V2X direct communication, information such as a vehicle speed, a driving direction, and a specific location that are of the vehicle and whether an emergency brake is applied, but also can share large-capacity data such as sensor data, video data, and map data with the surrounding vehicles. An amount of data of such services is greater than that of data of conventional V2X services. This requires that the LTE-based V2X direct communications technology can support a higher transmission rate for a transmit end.

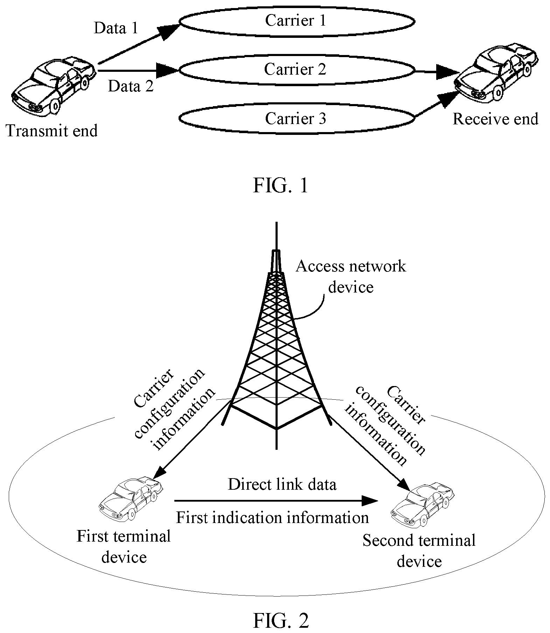

To implement a higher transmission rate in V2X direct communication, for a transmit end, when an amount of service data is relatively large, a plurality of carriers are selected to transmit the service data (to be specific, transmission resources on the plurality of carriers are aggregated to improve a transmission rate of the service data). However, a receive end has a limited receiving capability. When the transmit end uses the plurality of carriers to send the data, a failure in completely listening on, by the receive end, the carriers used by the transmit end to send the data is easily caused due to the limited capability, leading to a large quantity of packet losses and seriously affecting transmission performance. For example, as shown in FIG. 1, a transmit end uses a carrier 1 and a carrier 2 to send a specified type of service data. It is assumed that a receive end has only two receive links for respectively listening on the carrier 2 and a carrier 3. When the receive end is interested in a service sent by the transmit end, due to a limited receiving capability, the receive end 2 cannot sense that a service in which the receive end is interested is transmitted on the carrier 1, and the receive end continues to listen on the carrier 2 and the carrier 3, but misses all service data on the carrier 1, leading to a large quantity of packet losses and seriously affecting transmission performance.

WO2017034324 relates to method for transreceiving V2X signal of terminal in wireless communication system, and terminal using the method.

WO2016163816 relates to method and device for transmitting and receiving discovery signal in wireless communication system.

Publication by ZTE, titled "Considering CA on PC5 carrier", vol. RAN WG1, no. Hangzhou; 20170515 - 20170519, (20170514), 3GPP DRAFT; R1-1707211 - 6.2.3.1.1 CA ON PC5 CARRIER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings_3GPP_SYNC/RAN1/Docs/, relates to CA on PC5 carrier.

Publication by QUALCOMM INCORPORATED, titled, "Carrier Aggregation for V2X Phase 2", vol. RAN WG1, no. Hangzhou, China; 20170515 - 20170519, (20170514), 3GPP DRAFT; R1-1708786, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings_3GPP_SYNC/RAN1/Docs/, relates to carrier aggregation for V2X.

### SUMMARY

Embodiments of the present invention provide a multi-carrier based transmission method, a device, and a system, to resolve problems that a packet loss is caused and transmission performance is seriously affected during existing multi-carrier based transmission.

The invention is set out in the independent claims whereas preferred embodiments are outlined in the dependent claims.

Compared with the prior art, in the present invention, when the transmit end sends data to a peer end on a plurality of transmission carriers, the transmit end sends indication information to the peer end to indicate that the transmit end sends the data on the plurality of transmission carriers, so that the receive end learns, according to the indication information, that the transmit end sends the data on the plurality of transmission carriers, and adjusts a receive link corresponding to the plurality of transmission carriers to receive the corresponding data, thereby avoiding a packet loss caused because the receive end misses a carrier, and improving data transmission performance.

### BRIEF DESCRIPTION OF DRAWINGS

FIG. 1 is a schematic diagram of existing multi-carrier based transmission;
FIG. 2 is a simplified schematic diagram of a system architecture;
FIG. 3 is a schematic composition diagram of a terminal device;
FIG. 4 is a schematic composition diagram of an access network device;
FIG. 5 is a flowchart of a multi-carrier based transmission method according to an embodiment of the present invention;
FIG. 5a is a schematic composition diagram of a MAC PDU;
FIG. 5b is a schematic composition diagram of another MAC PDU;
FIG. 5c is a schematic composition diagram of a MAC PDU and SA data;
FIG. 6 is a flowchart of a multi-carrier based transmission method according to an embodiment of the present invention;
FIG. 7 is a schematic composition diagram of a first terminal device;
FIG. 8 is a schematic composition diagram of an apparatus;
FIG. 9 is a schematic composition diagram of a second terminal device;
FIG. 10 is a schematic composition diagram of another apparatus;
FIG. 11 is a schematic composition diagram of an access network device; and
FIG. 12 is a schematic composition diagram of still another apparatus;

### DESCRIPTION OF EMBODIMENTS

The implementations described below are not all claimed, they are included to help understanding the context of the invention. While the description often refers to embodiments, the embodiments of the invention are those which comprise at least all the features of an independent claim. The invention is defined by the appended claims.

Embodiments of the present invention provide a multi-carrier based transmission method. A basic principle thereof is: When transmitting direct link data on a plurality of carriers, a first terminal device sends, to a second terminal device, indication information used to instruct the second terminal device to perform transmission on a plurality of carriers, so that the second terminal device adjusts, according to the indication information, a receive link to receive corresponding data.

The following describes implementations of the embodiments of the present invention in detail with reference to accompanying drawings.

The multi-carrier based transmission method provided in the embodiments of the present invention may be applied to any communications system supporting multi-carrier based transmission, for example, a V2X communications system. In the V2X communications system, communication may be performed through V2V communication, V2I communication, V2P communication, or V2N communication. In the following descriptions, a communications system using V2V communication shown in FIG. 2 is used as a simplified schematic diagram of a system architecture of the embodiments of the present invention, to describe the multi-carrier based transmission method provided in the embodiments of the present invention.

As shown in FIG. 2, the communications system may include a first terminal device, a second terminal device, and an access network (access network, AN) device. The first terminal device is a transmit end, the second terminal device is a receive end, and the first terminal device and the second terminal device may transmit direct link data to each other. The first terminal device and the second terminal device may be or may not be located in a coverage area of the access network device. The access network device may connect to the first terminal device and the second terminal device in a wireless manner. It should be noted that in the embodiments of the present invention, the transmit end and the receive end are relative concepts. The transmit end may be a terminal device sending direct link data to another device. Correspondingly, the receive end may be a terminal device receiving direct link data sent by another device. In addition, FIG. 2 is only an example of an architectural diagram. In addition to functional nodes shown in FIG. 2, the 5G system may further include other functional nodes. This is not limited in the embodiments of the present invention.

The first terminal device and the second terminal device in FIG. 2 may be user equipment (user equipment, UE), for example, vehicles, cellular phones, cordless phones, Session Initiation Protocol (session initiation protocol, SIP) phones, smart phones, wireless local loop (wireless local loop, WLL) stations, personal digital assistants (personal digital assistant PDA), laptop computers, handheld communications devices, handheld computing devices, satellite radio devices, wireless modem cards, and/or other devices configured to communicate in a wireless system. The access network device in FIG. 2 may be a network including a plurality of AN nodes, and is configured to implement a wireless physical layer function, resource scheduling and radio resource management, wireless access control, and a mobility management function. The AN node may be an access node, a NodeB, an enhanced NodeB, a next-generation NodeB (generation nodeB, gNB), a transmission and reception point (transmission receive point, TRP), a transmission point (transmission point, TP), or another type of access network device.

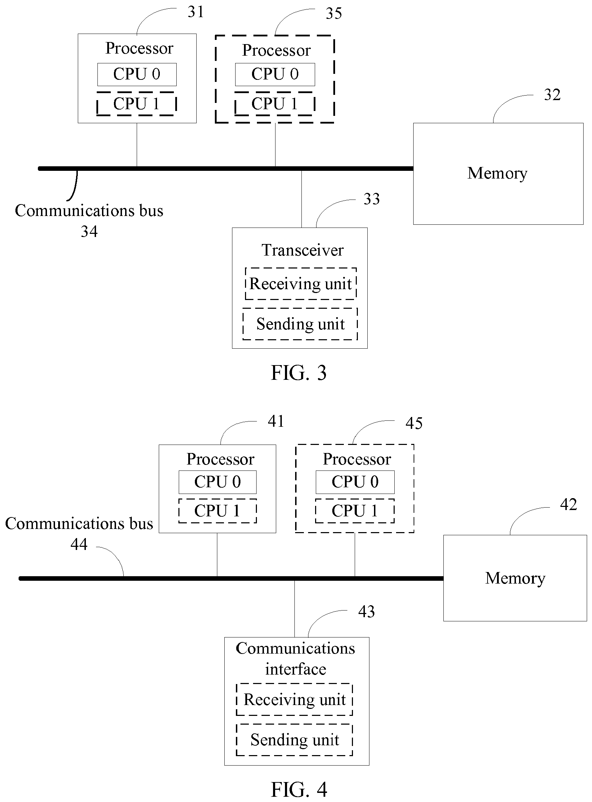

Specifically, the first terminal device and the second terminal device in FIG. 2 may include components shown in FIG. 3. FIG. 3 is a schematic composition diagram of a terminal device according to an embodiment of the present invention. As shown in FIG. 3, the terminal device may include at least one processor 31, a memory 32, a transceiver 33, and a communications bus 34. It should be noted that the device structure shown in FIG. 3 constitutes no limitation on a control plane node. More or fewer components than those shown in the figure may be included, or some components may be combined, or a different component deployment may be used. This is not limited in this embodiment of the present invention. The following specifically describes the components of the control plane node with reference to FIG. 3.

The processor 31 is a control center of the control plane node, and may be a processor or may be a general term of a plurality of processing elements. For example, the processor 31 is a central processing unit (central processing unit, CPU) or an application-specific integrated circuit (application-specific integrated circuit, ASIC), or may be one or more integrated circuits configured to implement this embodiment of the present invention, for example, one or more microprocessors (digital signal processor, DSP) or one or more field programmable gate arrays (field programmable gate array, FPGA). The processor 31 may perform various functions of the control plane node by running or executing a software program stored in the memory 32 and invoking data stored in the memory 32.

During specific implementation, in an embodiment, the processor 31 may include one or more CPUs, for example, a CPU 0 and a CPU 1 in FIG. 3. During specific implementation, in an embodiment, the control plane node may include a plurality of processors such as the processor 31 and a processor 35 in FIG. 3. Each of these processors may be a single-core (single-CPU) processor, or may be a multi-core (multi-CPU) processor. Herein, the processor may be one or more devices, circuits, and/or processing cores used for processing data (for example, a computer program instruction).

The memory 32 may be a read-only memory (read-only memory, ROM) or another type of static storage device that can store static information and a static instruction, a random access memory (random access memory, RAM) or another type of dynamic storage device that can store information and an instruction, or may be an electrically erasable programmable read-only memory (electrically erasable programmable read-only memory, EEPROM), a compact disc read-only memory (Compact Disc Read-Only Memory, CD-ROM), another compact disc storage medium, optical disc storage medium (including a compact disc, a laser disc, an optical disc, a digital versatile disc, a Blu-ray disc, or the like), or magnetic disk storage medium, another magnetic storage device, or any other medium that can be configured to carry or store expected program code in a form of an instruction or a data structure and that is accessible by a computer, but is not limited thereto. The memory 32 may exist independently, and is connected to the processor 31 by using the communications bus 34. Alternatively, the memory 32 may be integrated with the processor 31. The memory 32 is configured to store the software program used to perform solutions provided in the embodiments of the present invention, and the software program is controlled and executed by the processor 31.

The transceiver 33 is configured to communicate with another device or a communications network, for example, an Ethernet, a radio access network (radio access network, RAN), or a wireless local area network (wireless local area network, WLAN). The transceiver 33 may include a receiving unit to implement a receiving function and a sending unit to implement a sending function. Optionally, the transceiver 33 may be a radio frequency module.

The communications bus 34 may be an Industry Standard Architecture (industry standard architecture, ISA) bus, a peripheral component interconnect (peripheral component, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 3, but this does not mean that there is only one bus or only one type of bus.

It should be noted that the terminal device is not limited to the device structure shown in FIG. 3. More or fewer components than those shown in the figure may be included, or some components may be combined, or a different component deployment may be used. Although not shown, the terminal device may further include modules such as a display screen, a battery, a camera, a Bluetooth module, and a global positioning system (global positioning system, GPS) module. Details are not further provided herein.

When the terminal device shown in FIG. 3 is the first terminal device in the embodiments of the present invention, the terminal device can perform a function of the first terminal device in the multi-carrier based transmission method provided in the embodiments of the present invention. For example, the processor 31 of the terminal device may be configured to obtain first direct link data, and the transceiver 33 of the terminal device may be configured to send, to another terminal device, the first direct link data and first indication information used to indicate that the terminal device sends second direct link data on at least one second transmission carrier.

When the terminal device shown in FIG. 3 is the second terminal device in the embodiments of the present invention, the terminal device can perform a function of the second terminal device in the multi-carrier based transmission method provided in the embodiments of the present invention. For example, the transceiver 33 of the terminal device may be configured to receive first direct link data and first indication information from a first receive carrier, the processor 31 of the terminal device may be configured to determine, according to the indication information, that another terminal device sends second direct link data on a plurality of second receive carriers, and the transceiver 33 of the terminal device may be configured to receive the second direct link data from the second receive carriers.

FIG. 4 is a schematic composition diagram of an access network device according to an embodiment of the present invention. As shown in FIG. 4, the access network device may include at least one processor 41, a memory 42, a communications interface 43, and a communications bus 44. The components of the access network device are specifically described below with reference to FIG. 4.

The processor 41 is a control center of the access network device, and may be a processor or may be a general term of a plurality of processing elements. For example, the processor 41 is a CPU, an ASIC, or one or more integrated circuits configured to implement this embodiment of the present invention, for example, one or more DSPs or one or more FPGAs. The processor 41 may perform various functions of the access network device by running or executing a software program stored in the memory 42 and invoking data stored in the memory 42.

During specific implementation, in an embodiment, the processor 41 may include one or more CPUs, for example, a CPU 0 and a CPU 1 in FIG. 4. During specific implementation, in an embodiment, the access network device may include a plurality of processors such as the processor 41 and a processor 45 in FIG. 4. Each of these processors may be a single-CPU processor, or may be a multi-CPU processor. Herein, the processor may be one or more devices, circuits, and/or processing cores used for processing data (for example, a computer program instruction).

The memory 42 may be a ROM or another type of static storage device that can store static information and a static instruction, a RAM or another type of dynamic storage device that can store information and an instruction, or may be an EEPROM, a CD-ROM, another compact-disc storage medium, optical disc storage medium (including a compact disc, a laser disc, an optical disc, a digital versatile disc, a Blu-ray disc, or the like), or magnetic disk storage medium, another magnetic storage device, or any other medium that can be configured to carry or store expected program code in a form of an instruction or a data structure and that is accessible by a computer, but is not limited thereto. The memory 42 may exist independently, and is connected to the processor 41 by using the communications bus 44. Alternatively, the memory 42 may be integrated with the processor 41. The memory 42 is configured to store the software program used to perform solutions in the present invention, and the software program is controlled and executed by the processor 41.

The communications interface 43 is configured to communicate with another device or a communications network such as an Ethernet or a WLAN. The communications interface 43 may include a receiving unit to implement a receiving function and a sending unit to implement a sending function. Specifically, the communications interface 43 may be a radio frequency module.

The communications bus 44 may be an ISA bus, a PCI bus, an EISA bus, or the like. The bus may be classified into an address bus, a data bus, a control bus, and the like. For ease of representation, only one thick line is used to represent the bus in FIG. 4, but this does not mean that there is only one bus or only one type of bus.

The access network device shown in FIG. 4 may perform an operation performed by an access network device in the multi-carrier based transmission method provided in the embodiments of the present invention. For example, the processor 41 of the access network device generates first carrier configuration information and second carrier location information, and the communications interface 43 of the access network device sends the first carrier configuration information to a first terminal device, and sends the second carrier configuration information to a second terminal device.

With reference to the communications system shown in FIG. 2, the multi-carrier based transmission method provided in the embodiments of the present invention is described in detail, where a device in the following method embodiment may correspondingly include the components shown in FIG. 3 or FIG. 4. It should be noted that although a logical order is shown in the following method flowchart, in some cases, steps that are shown or described may be performed in an order different from this order.

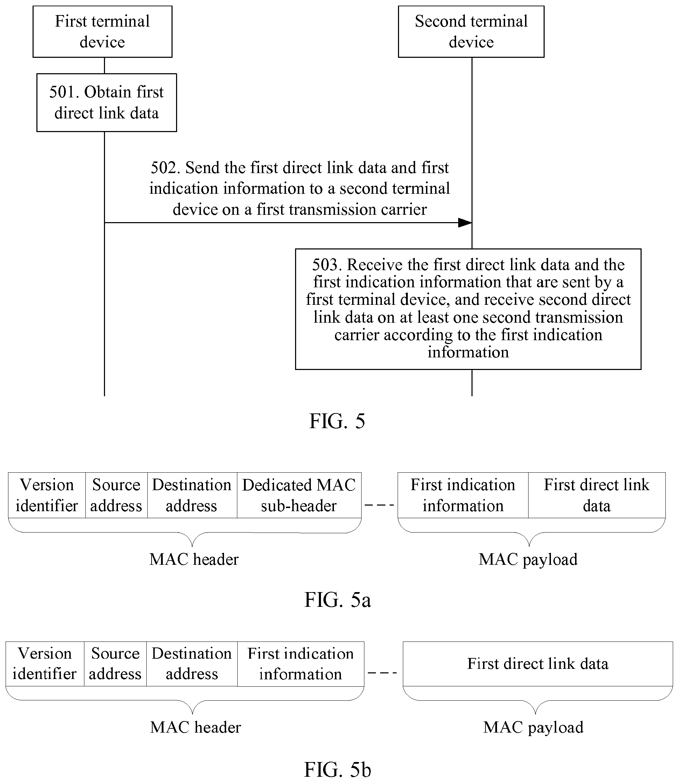

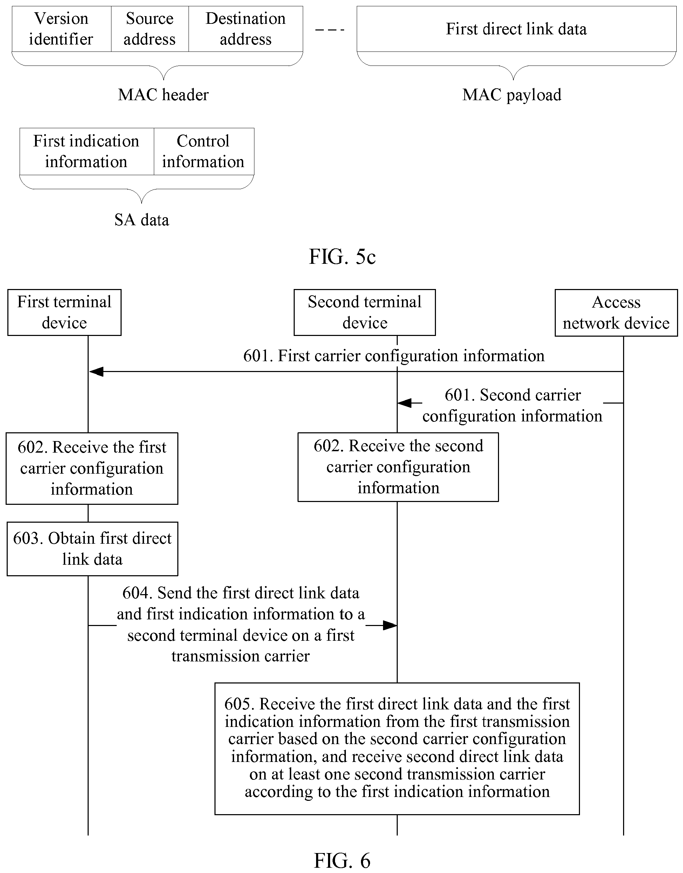

FIG. 5 is a flowchart of a multi-carrier based transmission method according to an embodiment of the present invention. As shown in FIG. 5, the method includes the following steps.

Step 501: A first terminal device obtains first direct link data.

The first terminal device may be a terminal device in coverage of an access network, or may be a terminal device beyond coverage of an access network.

For example, the first terminal device may obtain the first direct link data from an upper layer (for example, an RLC layer, a PDCP layer, or any other layer) of the first terminal device.

It should be noted that in addition to obtaining the first direct link data from the upper layer, the first terminal device may further obtain, from the upper layer, primitive information corresponding to the first direct link data, where the primitive information may include information such as a transmission parameter or a service feature that is used to indicate the first direct link data, for example, may include information such as a source address and a target address, where the target address and the service type of the first direct link data may have a mapping relationship. Each type of direct link data delivered by the upper layer corresponds to at least one target address.

Step 502: The first terminal device sends the first direct link data and first indication information to a second terminal device on a first transmission carrier.

The first transmission carrier is a transmission carrier having a relatively high transmission priority in transmission carriers.

The first indication information is used to indicate that the first terminal device sends second direct link data on at least one second transmission carrier.

The second direct link data and the first direct link data may be data of a same service type, or may be data of different service types. The first direct link data and the second direct link data may be same data or different data.

It should be noted that, that the first terminal device sends the first direct link data and first indication information to a second terminal device on a first transmission carrier may be: When determining to send the second direct link data on a plurality of transmission carriers, the first terminal device sends the first direct link data and the first indication information to the second terminal device on the first transmission carrier. That is, that the first terminal device determines to send the second direct link data on the plurality of transmission carriers is used as a trigger condition for the first terminal device to send the first direct link data and the first indication information to the second terminal device on the first transmission carrier.

Optionally, the first terminal device may determine, based on at least one data cache amount in the upper layer (for example, a MAC layer, an RLC layer, a PDCP layer, or another layer) of the first terminal device, a network indication, an upper layer indication, or another predetermined rule, whether to send the second direct link data on the plurality of transmission carriers.

Step 503: The second terminal device receives, from the first transmission carrier, the first direct link data and the first indication information that are sent by the first terminal device, and receives second direct link data on at least one second transmission carrier according to the first indication information.

That the second terminal device receives second direct link data on at least one second transmission carrier according to the first indication information may be: The second terminal device determines, based on content included in the first indication information, that the first terminal device sends the second direct link data on the at least one second transmission carrier, and receives the second direct link data on the at least one second transmission carrier.

Compared with the prior art, in the solution shown in FIG. 5, when sending direct link data to the second terminal device on a plurality of transmission carriers, the first terminal device sends indication information to the second terminal device to indicate that the first terminal device sends the direct link data on the plurality of transmission carriers. The second terminal device learns, according to the indication information, that the first terminal device sends the direct link data on the plurality of transmission carriers, and adjusts a receive link corresponding to the plurality of transmission carriers to receive corresponding data, thereby avoiding a packet loss caused because the second terminal device misses a carrier, and improving data transmission performance.

For example, step 502 of the sending, by the first terminal device, the first direct link data and first indication information to a second terminal device on a first transmission carrier may include any one of the following manners:

Manner 1: The first direct link data and the first indication information are included in a MAC PDU, and the first terminal device sends the first direct link data and the first indication information to the second terminal device by sending the MAC PDU on the first transmission carrier.

The MAC PDU has a format shown in FIG. 5a, and may include a MAC header and a MAC payload. The MAC payload may include the first indication information and the first direct link data, and the MAC header may include a dedicated MAC sub-header, where the dedicated MAC sub-header is used to indicate the first indication information included in the MAC payload and a location of the first indication information in the MAC payload.

The dedicated MAC sub-header may be a dedicated LCID.

In addition, to clarify the format of the MAC PDU and a service type of the data carried in the MAC PDU, the MAC PDU shown in FIG. 5a may further include a version identifier, a source address, and a destination address. The version identifier is used to identify the format of the MAC PDU, and the source address and the destination address are used to indicate the service type of the direct link data carried in the MAC PDU.

It should be noted that FIG. 5a is only an example diagram of the MAC PDU. In addition to content shown in FIG. 5a, the MAC PDU may further include other content. This is not limited in this embodiment of the present invention.

The first indication information in Manner 1 may be information in any one of the following forms:

(1) The first indication information includes frequency information of the at least one second transmission carrier, where the frequency band information is used to identify the at least one second transmission carrier. For example, the frequency information may be a carrier identifier of the at least one second transmission carrier or an index number corresponding to the at least one transmission carrier. For example, the at least one second transmission carrier includes eight transmission carriers, namely, the first to the eighth transmission carriers. In this case, index numbers 1 to 8 may be used as the first indication information to identify the eight transmission carriers.

(2) The first indication information is a bit string including at least one bit. The at least one bit corresponds to the at least one second transmission carrier in a one-to-one manner, and information carried in each bit is used to indicate whether the first terminal device sends the second direct link data on a second transmission carrier corresponding to the bit. Optionally, a value 0 filled in a bit may be used to indicate that the first terminal device does not transmit direct link data on a second transmission carrier corresponding to the bit, and a value 1 may be used to indicate that the first terminal device transmits direct link data on the second transmission carrier corresponding to the bit. A correspondence between the at least one bit and the at least one second transmission carrier is pre-configured, or a correspondence between the at least one bit and the at least one second transmission carrier is configured in a network, or a correspondence between the at least one bit and the at least one second transmission carrier is protocol-specified.

In various embodiments of the present invention, the pre-configuration may be a configuration carried in dedicated configuration signaling, and the configuration can be refreshed and changed. The protocol specification may be a standard specified in a communication protocol, and the standard cannot be refreshed or changed.

For example, there are eight second transmission carriers, namely, the first to the eighth second transmission carriers, and the eight second transmission carriers correspond to eight bits in the first indication information in a one-to-one manner. The 1^{st} second transmission carrier corresponds to a lower-order bit 1 in the eight bits, the 2^{nd} second transmission carrier corresponds to a lower-order bit 2 in the eight bits, and by analog, the 8^{th} second transmission carrier corresponds to a higher-order bit 8 in the eight bits. That is, a k^{th} bit corresponds to a k^{th} transmission carrier. When the first terminal device sends the second direct link data on the 1^{st}, the 3^{rd}, and the 5^{th} second transmission carriers, the first indication information may be 00010101. To be specific, bit values filled on the 1^{st}, the 3^{rd}, and the 5^{th} bits of the bit string are 1, to indicate that the first terminal device sends the second direct link data on the 1^{st}, the 3^{rd}, and the 5^{th} second transmission carriers.

(3) The first indication information is information used to indicate whether the first terminal device sends direct link data on a plurality of transmission carriers, where the information does not need to indicate specific transmission carriers used by the first terminal device to send the direct link data.

Optionally, the information may be 1-bit (bit) indication information. For example, a bit value 0 may be used to indicate that the first terminal device does not transmit direct link data on a plurality of carriers, and a bit value 1 may be used to indicate that the first terminal device transmits direct link data on a plurality of carriers.

(4) The first indication information is a value of a quantity of used transmission carriers, where the value of the quantity of the transmission carriers is used to indicate a quantity of transmission carriers used by the first terminal device. For example, if the first indication information indicates that the first terminal uses K transmission carriers, it represents that the first terminal performs transmission on first K transmission carriers based on transmission priorities.

K is an integer greater than or equal to 1. The transmission carriers (which include the second transmission carrier or may include the first transmission carrier) and corresponding priorities may be obtained through pre-configuration, network configuration, or protocol specification. The first transmission carrier may be or may not be included for calculation of the value of the carrier quantity.

Manner 2: The first direct link data and the first indication information are included in a media access control protocol data unit (Media Access Control protocol data unit, MAC PDU), and the first terminal device sends the first direct link data and the first indication information to the second terminal device by sending the MAC PDU on the first transmission carrier.

The MAC PDU has a format shown in FIG. 5b, and may include a MAC header and a MAC payload. The MAC payload may include the first direct link data, and the MAC header may include the first indication information. In addition, to clarify the format of the MAC PDU and a service type of the data carried in the MAC PDU, the MAC PDU shown in FIG. 5b may further include a version identifier, a source address, and a destination address. The version identifier is used to identify the format of the MAC PDU, and the source address and the destination address are used to indicate the service type of the direct link data carried in the MAC PDU.

Optionally, the first indication information may occupy fixed bits in the MAC header, and becomes a fixed component of the MAC header. When the version identifier of the MAC PDU is a fixed value, the first indication information needs to be carried in the MAC PDU each time and sent to the second terminal device. That is, when the first terminal device determines to send direct link data on at least one transmission carrier, the first terminal device sends the first indication information to the second terminal device by adding the first indication information to the fixed bits in the MAC header. When the first terminal device does not determine to send direct link data on at least one transmission carrier, the first terminal device fills, with 0 or other information, the fixed bits used to carry the first indication information, to indicate that the first terminal device does not perform multi-carrier based transmission.

Optionally, the first indication information may be carried in a dedicated MAC control element (control element, CE) in the MAC header, and the MAC CE may be identified by using a dedicated logical channel identifier.

It should be noted that FIG. 5b is only an example diagram of the MAC PDU. In addition to content shown in FIG. 5b, the MAC PDU may further include other content. This is not limited in this embodiment of the present invention.

For the first indication information in Manner 2, refer to the first indication information in Manner 1, and details are not further provided herein.

Manner 3: As shown in FIG. 5c, the first indication information is included in SA data corresponding to the first direct link data, and the first direct link data is included in a MAC PDU. The first terminal device sends the first direct link data to the second terminal device by sending the MAC PDU on the first transmission carrier, and sends the first indication information to the second terminal device by sending the SA data on the first transmission carrier.

The SA data may include control information related to transmission of the first direct link data, such as a time-frequency resource location, a modulation and coding scheme, a service priority, and a transmission interval period.

The MAC PDU may include a MAC header and a MAC payload. The MAC payload may include the first direct link data, and the MAC header may include a version identifier, a source address, and a destination address. The version identifier is used to identify a format of the MAC PDU, and the source address and the destination address are used to indicate a service type of direct link data carried in the MAC PDU.

It should be noted that FIG. 5c is only an example diagram of the MAC PDU. In addition to content shown in FIG. 5c, the SA data may further include other content, and the MAC PDU may further include other content. This is not limited in this embodiment of the present invention.

For the first indication information in Manner 3, refer to the first indication information in Manner 1, and details are not further provided herein.

It should be noted that in various embodiments of the present invention, transmission and receiving are relative concepts. A transmission carrier may be replaced with a receive carrier. To be specific, a transmission carrier used by the first terminal device is a receive carrier for the second terminal device. Therefore, for a receive end (that is, the second terminal device), the second terminal device receives some indication information used to indicate that the first terminal device sends the second direct link data on the at least one second receive carrier. That is, from a perspective of the second terminal device, the second terminal device may receive the first indication information in the foregoing Manner 1 to Manner 3. The first indication information may include the following content:
(1) The first indication information includes frequency information of the at least one second receive carrier, where the frequency band information is used to identify the at least one second receive carrier, for example, may be a carrier identifier of the at least one second receive carrier or an index number corresponding to the at least one receive carrier. For example, the at least one second receive carrier includes eight receive carriers, namely, the first to the eighth receive carriers. In this case, index numbers 1 to 8 may be used as the first indication information to identify the eight receive carriers.
(2) The first indication information is a bit string including at least one bit. The at least one bit corresponds to the at least one second receive carrier in a one-to-one manner, and information carried in each bit is used to indicate whether the first terminal device sends the second direct link data on a second receive carrier corresponding to the bit. A correspondence between the at least one bit and the at least one second receive carrier is pre-configured, or a correspondence between the at least one bit and the at least one second receive carrier is configured in a network, or a correspondence between the at least one bit and the at least one second receive carrier is protocol-specified.
   Optionally, a value 0 filled in a bit may be used to indicate that the first terminal device does not send direct link data on a second receive carrier corresponding to the bit, and a value 1 may be used to indicate that the first terminal device sends direct link data on the second receive carrier corresponding to the bit.
   For example, there are eight second receive carriers, namely, the first to the eighth second receive carriers, and the eight second receive carriers correspond to eight bits in the first indication information in a one-to-one manner. The 1^{st} second receive carrier corresponds to a lower-order bit 1 in the eight bits, the 2^{nd} second receive carrier corresponds to a lower-order bit 2 in the eight bits, and by analog, the 8^{th} second receive carrier corresponds to a higher-order bit 8 in the eight bits. That is, a k^{th} bit corresponds to a k^{th} receive carrier. When the first terminal device sends the second direct link data on the 1^{st}, the 3^{rd}, and the 5^{th} second receive carriers, the first indication information may be 00010101. To be specific, bit values filled on the 1^{st}, the 3^{rd}, and the 5^{th} bits of the bit string are 1, to indicate that the second terminal device receives the second direct link data on the 1^{st}, the 3^{rd}, and the 5^{th} second receive carriers.
(3) The first indication information is information used to indicate whether the first terminal device sends direct link data on a plurality of receive carriers, where the information does not need to indicate specific receive carriers used by the first terminal device to send the direct link data.
   Optionally, the information may be 1-bit (bit) indication information. For example, a bit value 0 may be used to indicate that the second terminal device does not receive direct link data on a plurality of carriers, and a bit value 1 may be used to indicate that the second terminal device receives direct link data on a plurality of carriers.
(4) The first indication information is a value of a quantity of used receive carriers, where the value of the quantity of the receive carriers is used to indicate a quantity of receive carriers used by the first terminal device. For example, if the first indication information indicates that the first terminal uses K receive carriers, it represents that the first terminal performs receiving on first K receive carriers based on receiving priorities.

K is an integer greater than or equal to 1. The receive carriers (which include the second receive carrier or may include the first receive carrier) and corresponding priorities may be obtained through pre-configuration, network configuration, or protocol specification. The first receive carrier may be or may not be included for calculation of the value of the carrier quantity.

For example, the receiving, by the second terminal device, second direct link data on at least one second receive carrier according to the first indication information may include:
when the first indication information is the information described in the foregoing (1), identifying, by the second terminal device based on the frequency information included in the first indication information, at least one second receive carrier identified by the frequency information, and receiving the second direct link data on the at least one second receive carrier; or
when the first indication information is the information described in the foregoing (2), determining, by the second terminal device based on a mapping relationship between a bit in the bit string and a transmission carrier and a value of each bit in the bit string, a second receive carrier used by the first terminal device to send the second direct link data.

For example, a k^{th} bit corresponds to a k^{th} transmission carrier. When the first indication information received by the second terminal device is 00010101, the second terminal device determines that the first terminal device sends the second direct link data on the 1^{st}, the 3^{rd}, and the 5^{th} second receive carriers.

Alternatively, when the first indication information is the information described in the foregoing (3), the second terminal device obtains a receive carrier list corresponding to direct link data through pre-configuration or network configuration. After receiving the first indication information, the second terminal device searches, for the direct link data, a plurality of receive carriers indicated by the receive carrier list, and after finding corresponding direct link data on a second receive carrier, listens on the second receive carrier to receive the second direct link data.

The receive carrier list includes at least one receive carrier. Optionally, the second terminal device may obtain the receive carrier list from an access network device by using RRC signaling or a system message.

For example, the second terminal device obtains, from the access network in advance, receive carriers, which are a carrier 1, a carrier 2, and a carrier 3, included in the receive carrier list corresponding to the direct link data. The first terminal device currently sends the direct link data on the carrier 1. When determining to also use the carrier 2 to send the direct link data, the first terminal device adds the first indication information to a MAC PDU sent on the carrier 1. After receiving the first indication information, the second terminal device begins to receive the direct link data on the carrier 1, the carrier 2, and the carrier 3 based on the receive carrier list, and finally finds that there is corresponding direct link data on the carrier 1 and the carrier 2. In this case, the second terminal device subsequently continues to listen on the carrier 1 and the carrier 2 to receive direct link data.

Optionally, in the solution shown in FIG. 5, to clarify the service type of the first direct link data sent on the first transmission carrier and a service type of the second direct link data sent on the second transmission carrier, a MAC PDU in which the first direct link data is located may include first service identification information, and a MAC PDU in which the second direct link data is located may include second service identification information.

The first service identification information is used to identify the service type of the first direct link data, and the second service identification information is used to identify the service type of the second direct link data. The first service identification information may be the same as the second service identification information. In this case, it indicates that the two pieces of direct link data are direct link data of a same type. The first service identification information and the second service identification information each may include at least one of the following information: a source address, a target address, a service type identifier, a priority identifier, a direct link bearer identifier, a logical channel identifier, and a stream identifier.

Correspondingly, the receiving, by the second terminal device, second direct link data on a second transmission carrier may alternatively include:
identifying, by the second terminal device, the service type of the second direct link data based on the second service identification information; and if the service type of the second direct link data is a service type in which the second terminal device is interested, receiving the second direct link data on the second transmission carrier; otherwise, abandoning receiving the second direct link data.

Specifically, a method used by the second terminal device to adjust a receive link of the second terminal device to receive a service of a specified type is not limited in the present invention. For example, the second terminal device may alternatively sort priorities of services in which the second terminal device is interested, and receive direct link data based on a service priority order. For example, the second terminal device is more interested in direct link data of a service type 1 than direct link data of a service type 2. It is assumed that the direct link data of the service type 1 is sent on the carrier 1 and the carrier 2, and the direct link data of the service type 2 is sent on the carrier 3. When the second terminal device can receive direct link data on only two carriers, after obtaining first indication information corresponding to the direct link data of the service type 1, that is, when learning, according to the first indication information, that the direct link data of the service type 1 is sent on a plurality of carriers, the second terminal device abandons, based on the service priority order and a receiving capability of the second terminal device, receiving the direct link data of the service type 2, and receives the direct link data of the service type 1 on the carrier 1 and the carrier 2.

Optionally, to enable the first terminal device to send the direct link data on a suitable transmission carrier, the technical solution shown in FIG. 5 includes:
obtaining, by the first terminal device, first carrier configuration information, where the first carrier configuration information includes a first transmission carrier identifier and at least one second transmission carrier identifier, the first transmission carrier identifier is used to identify the first transmission carrier, the at least one second transmission carrier identifier is used to identify the at least one second transmission carrier, and a transmission priority of the first transmission carrier is higher than a transmission priority of any one of the at least one second transmission carrier.

Correspondingly, the first terminal device sends, based on the first carrier configuration information, the first direct link data on the first transmission carrier whose transmission priority is highest. When the first terminal device determines to send the second direct link data on a transmission carrier other than the first transmission carrier, the first terminal device sends, based on the first carrier configuration information, the second direct link data on a second transmission carrier whose transmission priority is lower than the transmission priority of the first transmission carrier.

According to the invention, the first terminal device obtains the first carrier configuration information from an access network device, where the first carrier configuration information may be included in dedicated RRC signaling or a system message. That is, the first terminal device may obtain the first carrier configuration information by using the dedicated RRC signaling or the system message sent by the access network device.

The first carrier configuration information is used by the first terminal device to determine, based on the first carrier configuration information, a transmission carrier used to send direct link data. Each carrier identifier in the transmission carrier information may be a frequency of a transmission carrier or an index number of the transmission carrier.

Specifically, the first carrier configuration information is any one of the following information (a), (b), (c), and (d):
(a) Transmission carrier identifiers in the first carrier configuration information may be sorted in descending order of transmission priorities of transmission carriers. After obtaining the first carrier configuration information, the first terminal device determines to send the first direct link data and the first indication information on a transmission carrier corresponding to a transmission carrier identifier that is ranked first.
   For example, transmission identifiers corresponding to the first to the eighth transmission carriers are 1 to 8, and transmission priorities of the first to the eighth transmission carriers are sorted in descending order. In this case, the transmission carrier identifiers in the first carrier configuration information are ranked as 12345678.
(b) Transmission carrier identifiers in the first carrier configuration information may alternatively be sorted in ascending order of transmission priorities of transmission carriers. After obtaining the first carrier configuration information, the first terminal device determines to send the first direct link data and the first indication information on a transmission carrier corresponding to a transmission carrier identifier that is ranked last.
   For example, transmission identifiers corresponding to the first to the eighth transmission carriers are 1 to 8, and transmission priorities of the first to the eighth transmission carriers are sorted in descending order. In this case, the transmission carrier identifiers in the first carrier configuration information are ranked as 87654321.
(c) The first carrier configuration information may further include a first transmission priority identifier and at least one second transmission priority identifier, where the first transmission priority identifier corresponds to the first transmission carrier identifier, the at least one second transmission priority identifier corresponds to the at least one second transmission carrier identifier in a one-to-one manner, and a transmission priority corresponding to the first transmission priority identifier is higher than a transmission priority corresponding to any one of the at least one second transmission priority identifier. Each transmission priority identifier is used to identify a priority of a transmission carrier identified by a transmission carrier identifier corresponding to the transmission priority identifier.
   After obtaining the first carrier configuration information, the first terminal device determines a transmission carrier identified by a transmission carrier identifier corresponding to the first transmission priority identifier, to send the first direct link data and the first indication information.
   The transmission priority may be a digit, a letter, or another identifier. For example, a highest priority may be identified by using a digit 1 or a letter A. For example, transmission identifiers corresponding to the first to the eighth transmission carriers are 1 to 8, and transmission priorities of the first to the eighth transmission carriers are sorted in descending order. In this case, eight transmission priority identifiers A to H are set in the first carrier configuration information, where transmission priorities identified by the eight transmission priority identifiers A to H are sorted in descending order of A to H. The letter A corresponds to a transmission carrier identifier 1, the letter B corresponds to a transmission carrier identifier 2, the letter C corresponds to a transmission carrier identifier 3, the letter D corresponds to a transmission carrier identifier 4, the letter E corresponds to a transmission carrier identifier 5, the letter F corresponds to a transmission carrier identifier 6, the letter G corresponds to a transmission carrier identifier 7, and the letter H corresponds to a transmission carrier identifier 8.
(d) The first carrier configuration information may further include third service identification information and at least one piece of fourth service identification information, the at least one piece of fourth service identification information corresponds to the at least one second transmission carrier identifier in a one-to-one manner, the third service identifier is used to indicate a service type of direct link data sent on a transmission carrier identified by the first transmission carrier identifier, and each piece of fourth service identification information is used to indicate a service type of direct link data sent on a transmission carrier identified by a second transmission carrier identifier corresponding to the fourth service identification information.

After obtaining the first carrier configuration information, the first terminal device adds the third service identifier to a MAC PDU in which direct link data sent on the first transmission carrier having a highest transmission priority is located, and adds the fourth service identifier to a MAC PDU in which direct link data sent on a second transmission carrier having a second highest transmission priority is located. That is, the first service identification information may be the third service identification information, and the second service identification information may be the fourth service identification information.

Any one of the at least one piece of fourth service identification information may be the same as or different from the third service identification information. The third service identification information and the fourth service identification information each include at least one of the following information: a source address, a target address, a service type identifier, a priority identifier, a direct link bearer identifier, a logical channel identifier, and a stream identifier.

In this way, after obtaining the first carrier configuration information, the first terminal device may transmit, based on the first carrier configuration information, direct link data on a suitable transmission carrier. For example, important information (for example, the first indication information) is transmitted on the first transmission carrier having a highest priority, so that the second terminal device can well receive the first indication information, thereby improving data transmission performance.

To enable the second terminal device to receive the direct link data on a suitable receive carrier, the solution shown in FIG. 5 includes:
obtaining, by the second terminal device, second carrier configuration information, where the second carrier configuration information includes a first receive carrier identifier and at least one second receive carrier identifier, the first receive carrier identifier is used to identify the first receive carrier, the at least one second receive carrier identifier is used to identify the at least one second receive carrier, and a receiving priority of the first receive carrier is higher than a receiving priority of any one of the at least one second receive carrier.

Correspondingly, the second terminal device receives, based on the second carrier configuration information, the first direct link data and the first indication information on the first receive carrier whose receiving priority is highest. After receiving the first indication information, the second terminal device receives, based on the second carrier configuration information, the second direct link data on the at least one second receive carrier whose receiving priority is lower than that of the first receive carrier.

The second carrier configuration information is used by the second terminal device to determine, based on the second carrier configuration information, a carrier for receiving the direct link data. The second terminal device obtains the second carrier configuration information from the access network device. The second carrier configuration information may be included in dedicated RRC signaling or a system message. That is, the second terminal device may obtain the second carrier configuration information by using the dedicated RRC signaling or the system message sent by the access network device.

Specifically, with reference to the second carrier configuration information sent by the access network device to the first terminal device, the second carrier configuration information is any one of the following information:

Receiving carrier identifiers in the second carrier configuration information may be sorted in descending order of receiving priorities of receive carriers. After obtaining the second carrier configuration information, the second terminal device determines to send the first direct link data and the first indication information on a receive carrier corresponding to a receive carrier identifier that is ranked first.

For example, receiving identifiers corresponding to the first to the eighth receive carriers are 1 to 8, and receiving priorities of the first to the eighth receive carriers are sorted in descending order. In this case, the receive carrier identifiers in the second carrier configuration information are ranked as 12345678.

Alternatively, receive carrier identifiers in the second carrier configuration information may be sorted in ascending order of receiving priorities of receive carriers. After obtaining the second carrier configuration information, the second terminal device determines to send the first direct link data and the first indication information on a receive carrier corresponding to a receive carrier identifier that is ranked last.

For example, receiving identifiers corresponding to the first to the eighth receive carriers are 1 to 8, and receiving priorities of the first to the eighth receive carriers are sorted in descending order. In this case, the receive carrier identifiers in the second carrier configuration information are ranked as 87654321.

Alternatively, the second carrier configuration information may further include a first receiving priority identifier and at least one second receiving priority identifier, where the first receiving priority identifier corresponds to the first receive carrier identifier, the at least one second receiving priority identifier corresponds to the at least one second receive carrier identifier in a one-to-one manner, and a receiving priority corresponding to the first receiving priority identifier is higher than a receiving priority corresponding to any one of the at least one second receiving priority identifier. Each receiving priority identifier is used to identify a priority of a receive carrier identified by a receive carrier identifier corresponding to the receiving priority identifier.

After obtaining the second carrier configuration information, the second terminal device determines to send the first direct link data and the first indication information on a receive carrier identified by a receive carrier identifier corresponding to the first receiving priority identifier.

The receiving priority identifier may be a digit, a letter, or another identifier. For example, a highest priority may be identified by using a digit 1 or a letter A. For example, receiving identifiers corresponding to the first to the eighth receive carriers are 1 to 8, and receiving priorities of the first to the eighth receive carriers are sorted in descending order. In this case, eight receiving priority identifiers A to H are set in the second carrier configuration information, where receiving priorities identified by the eight receiving priority identifiers A to H are sorted in descending order of A to H. The letter A corresponds to a receive carrier identifier 1, the letter B corresponds to a receive carrier identifier 2, the letter C corresponds to a receive carrier identifier 3, the letter D corresponds to a receive carrier identifier 4, the letter E corresponds to a receive carrier identifier 5, the letter F corresponds to a receive carrier identifier 6, the letter G corresponds to a receive carrier identifier 7, and the letter H corresponds to a receive carrier identifier 8.

Alternatively, the second carrier configuration information may further include third service identification information and at least one piece of fourth service identification information, the at least one piece of fourth service identification information corresponds to the at least one second receive carrier identifier in a one-to-one manner, the third service identifier is used to indicate a service type of direct link data received on a receive carrier identified by the first receive carrier identifier, and each piece of fourth service identification information is used to indicate a service type of direct link data received on a receive carrier identified by a second receive carrier identifier corresponding to the fourth service identification information.

After obtaining the second carrier configuration information, the second terminal device adds the third service identifier to a MAC PDU in which direct link data sent on the first receive carrier having a highest receiving priority is located, and adds the fourth service identifier to a MAC PDU in which direct link data sent on a second receive carrier having a second highest receiving priority is located. That is, the first service identification information may be the third service identification information, and the second service identification information may be the fourth service identification information.

Any one of the at least one piece of fourth service identification information may be the same as or different from the third service identification information. The third service identification information and the fourth service identification information each include at least one of the following information: a source address, a target address, a service type identifier, a priority identifier, a direct link bearer identifier, a logical channel identifier, and a stream identifier.

In this way, after obtaining the second carrier configuration information, the second terminal device may receive, based on the second carrier configuration information, direct link data on a suitable receive carrier. For example, important information (for example, the first indication information) is received on the first receive carrier having a highest priority, so that the second terminal device can well receive the first indication information, thereby improving data receiving performance.

Optionally, to enable the second terminal device to demodulate the received second direct link data, the solution shown in FIG. 5 may further include:
sending, by the first terminal device to the second terminal device, SA data corresponding to the second direct link data, where the SA data corresponding to the second direct link data may be used to indicate control information (for example, a time-frequency resource location, a modulation and coding scheme, a service priority, and a transmission time interval) related to transmission of the second direct link data, so that when receiving the SA data, the second terminal device receives the second direct link data based on the control information indicated by the SA data.

Optionally, the solution shown in FIG. 5 may further include:
receiving, by the second terminal device from the first terminal device, SA data corresponding to the second direct link data; and
processing, by the second terminal device based on the SA data, the second direct link data received from the at least one second transmission carrier.

For a process of processing, by the second terminal device, direct link data based on the SA data, refer to the prior art, and details are not further provided herein.

Specifically, for the foregoing optional steps, refer to related descriptions in FIG. 6, and details are not further provided.

FIG. 6 shows another multi-carrier based transmission method according to an embodiment of the present invention. The method may include the following steps.

Step 601: An access network device sends first carrier configuration information to a first terminal device, and sends second carrier configuration information to a second terminal device.

The first carrier configuration information is carrier configuration information obtained by the first terminal device in this embodiment of the present invention, the second carrier configuration information is carrier configuration information obtained by the second terminal device in this embodiment of the present invention, and the first carrier configuration information and the second carrier configuration information are the same as the first carrier configuration information and the second carrier configuration information in the solution shown in FIG. 5. Details are not further provided herein.

For example, the access network device may send the carrier configuration information to the first terminal device and the second terminal device by using dedicated RRC signaling or a system message.

It should be noted that the access network device may simultaneously send the carrier configuration information to the first terminal device and the second terminal device, or may send the carrier configuration information to the first terminal device and the second terminal device in sequence. This is not limited in this embodiment of the present invention.

Step 602: The first terminal device receives the first carrier configuration information from the access network device, and the second terminal device receives the second carrier configuration information from the access network device.

For example, the first terminal device and the second terminal device may receive the first carrier configuration information and the second carrier configuration information by using dedicated RRC signaling or a system message.

It should be noted that the first terminal device and the second terminal device may simultaneously receive the carrier configuration information, or may receive the carrier configuration information in sequence. This is not limited in this embodiment of the present invention.

Step 603: The first terminal device obtains first direct link data.

Step 603 may be performed with reference to step 501, and details are not further provided herein.

Step 604: The first terminal device sends, based on the first carrier configuration information, the first direct link data and first indication information to the second terminal device on a first transmission carrier.

For example, the sending, by the first terminal device based on the first carrier configuration information, the first direct link data and first indication information to the second terminal device on a first transmission carrier may include:
determining, by the first terminal device based on the first carrier configuration information, the first transmission carrier whose transmission priority is highest, and sending the first direct link data and the first indication information to the second terminal device on the first transmission carrier.

Specifically, for how the first terminal device determines, based on the first carrier configuration information, the first transmission carrier whose transmission priority is highest, refer to the solution shown in FIG. 5, and details are not further provided herein.

Step 605: The second terminal device receives the first direct link data and the first indication information from the first transmission carrier based on the second carrier configuration information, and receives second direct link data on at least one second transmission carrier according to the first indication information.

Step 605 may be performed with reference to step 503, and details are not further provided herein.

It should be noted that in the solution shown in FIG. 6, step 601, step 602, and step 603 may be not limited to an execution order shown in FIG. 6. Optionally, step 601 and step 602 may be performed after step 603. This is not limited in this embodiment of the present invention.

The foregoing describes the solutions provided in the embodiments of the present invention mainly from the perspective of interaction between nodes. It may be understood that to achieve the foregoing functions, the nodes such as the first terminal device, the second terminal device, and the access network device include corresponding hardware structures and/or software modules for performing the functions. A person of ordinary skill in the art should easily be aware that, in combination with the examples described in the embodiments disclosed in this specification, algorithms and steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

In the embodiments of the present invention, functional module division may be performed on the first terminal device, the second terminal device, and the access network device according to the examples of the methods. For example, various functional modules may be divided according to the corresponding functions, or two or more functions may be integrated into one processing module. The integrated module may be implemented in a form of hardware, or may be implemented in a form of a software functional module. It should be noted that, in the embodiments of the present invention, module division is exemplary, and is merely a logical function division. In actual implementation, another division manner may be used.

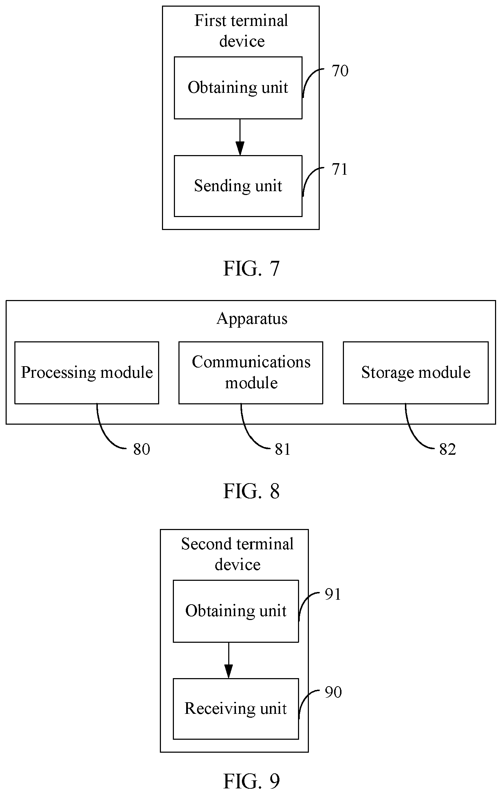

When various functional modules are divided corresponding to various functions, FIG. 7 is a possible schematic composition diagram of a first terminal device. The first terminal device may be configured to perform a function of the first terminal device in the foregoing embodiments. As shown in FIG. 7, the first terminal device may include an obtaining unit 70 and a sending unit 71.

The obtaining unit 70 is configured to support the first terminal device in performing step 501 in FIG. 5 and step 602 and step 603 in FIG. 6.

The sending unit 71 is configured to support the first terminal device in performing step 502 in FIG. 5 and step 604 in FIG. 6.

It should be noted that all related content of the steps in the foregoing method embodiments may be referred for the functional descriptions of the corresponding functional modules. Details are not further provided herein. The first terminal device provided in this embodiment of the present invention is configured to perform the foregoing multi-carrier based transmission method, and therefore, can achieve a same effect as the foregoing multi-carrier based transmission method.

When an integrated unit is used, FIG. 8 shows an apparatus. The apparatus exists in a product form of a chip, and is configured to perform a function of the first terminal device in the foregoing embodiments. As shown in FIG. 8, the apparatus may include a processing module 80 and a communications module 81.

The processing module 80 is configured to control and manage an action of the apparatus. For example, the processing module 80 is configured to support the apparatus in performing step 501 in FIG. 5, step 603 in FIG. 6, and/or another process in a technology described in this specification. The communications module 81 is configured to support the apparatus in communicating with another network entity, for example, communicating with a functional module or a network entity shown in FIG. 2. The apparatus may further include a storage module 82, configured to store program code and data of the apparatus.

The processing module 80 may be a processor or a controller. The controller/processor may implement or execute various example logical blocks, modules, and circuits described with reference to content disclosed in the present invention. Alternatively, the processor may be a combination of processors implementing a computing function, for example, a combination of one or more microprocessors, or a combination of a DSP and a microprocessor. The communications module 81 may be a transceiver, a transmission/receiving circuit, or the like. The storage module 82 may be a memory.

When the processing module 80 is a processor, the communications module 81 is a transceiver, and the storage module 82 is a memory, the apparatus in this embodiment of the present invention may be the apparatus shown in FIG. 3.

When various functional modules are divided corresponding to various functions, FIG. 9 is a possible schematic composition diagram of a second terminal device. The second terminal device may be configured to perform a function of the second terminal device in the foregoing embodiments. As shown in FIG. 9, the second terminal device may include a receiving unit 90 and an obtaining unit 91.

The receiving unit 90 is configured to support the second terminal device in performing step 503 in FIG. 5 and step 605 in FIG. 6.

The obtaining unit 91 is configured to support the second terminal device in performing step 602 in FIG. 6.

It should be noted that all related content of the steps in the foregoing method embodiments may be referred for the functional descriptions of the corresponding functional modules. Details are not further provided herein. The second terminal device provided in this embodiment of the present invention is configured to perform the foregoing multi-carrier based transmission method, and therefore, can achieve a same effect as the foregoing multi-carrier based transmission method.

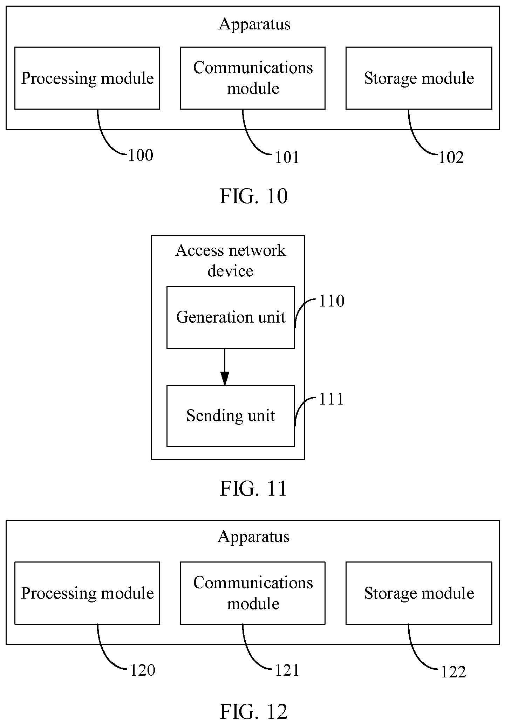

When an integrated unit is used, FIG. 10 shows an apparatus. The apparatus exists in a product form of a chip, and is configured to perform a function of the second terminal device in the foregoing embodiments. As shown in FIG. 10, the apparatus may include a processing module 100 and a communications module 101.

The processing module 100 is configured to control and manage an action of the apparatus. For example, the processing module 100 is configured to support the apparatus in performing step 602 in FIG. 6 and/or another process in a technology described in this specification. The communications module 101 is configured to support the apparatus in communicating with another network entity, for example, communicating with a functional module or a network entity shown in FIG. 2. The apparatus may further include a storage module 102, configured to store program code and data of the apparatus.

The processing module 100 may be a processor or a controller. The controller/processor may implement or execute various example logical blocks, modules, and circuits described with reference to content disclosed in the present invention. Alternatively, the processor may be a combination of processors implementing a computing function, for example, a combination of one or more microprocessors, or a combination of a DSP and a microprocessor. The communications module 101 may be a transceiver, a transmission/receiving circuit, or the like. The storage module 102 may be a memory.

When the processing module 100 is a processor, the communications module 101 is a transceiver, and the storage module 102 is a memory, the apparatus in this embodiment of the present invention may be the apparatus shown in FIG. 3.

When various functional modules are divided corresponding to various functions, FIG. 11 is a possible schematic composition diagram of an access network device. As shown in FIG. 11, the access network device may include a generation unit 110 and a sending unit 111.

The generation unit 110 is configured to support the access network device in generating carrier configuration information.

The sending unit 111 is configured to support the access network device in performing step 601 in FIG. 6.

It should be noted that all related content of the steps in the foregoing method embodiments may be referred for the functional descriptions of the corresponding functional modules. Details are not further provided herein. The access network device provided in this embodiment of the present invention is configured to perform the foregoing multi-carrier based transmission method, and therefore, can achieve a same effect as the foregoing multi-carrier based transmission method.

When an integrated unit is used, FIG. 12 shows an apparatus. The apparatus exists in a product form of a chip, and is configured to perform a function of the access network device in the foregoing embodiments. As shown in FIG. 12, the apparatus may include a processing module 120 and a communications module 121.

The processing module 120 is configured to control and manage an action of the apparatus. For example, the processing module 120 is configured to support the apparatus in performing a function of obtaining carrier configuration information. The communications module 121 is configured to support the apparatus in communicating with another network entity, for example, communicating with a functional module or a network entity shown in FIG. 2. The apparatus may further include a storage module 122, configured to store program code and data of the apparatus.

The processing module 120 may be a processor or a controller. The controller/processor may implement or execute various example logical blocks, modules, and circuits described with reference to content disclosed in the present invention. Alternatively, the processor may be a combination of processors implementing a computing function, for example, a combination of one or more microprocessors, or a combination of a DSP and a microprocessor. The communications module 121 may be a transceiver, a transmission/receiving circuit, a communications interface, or the like. The storage module 122 may be a memory.

When the processing module 120 is a processor, the communications module 121 is a communications interface, and the storage module 122 is a memory, the apparatus in this embodiment of the present invention may be the apparatus shown in FIG. 4.

The foregoing descriptions about implementations allow a person skilled in the art to understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely exemplary. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the embodiments of the present invention essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in the embodiments of the present invention. The foregoing storage medium includes: any medium that can store program code, such as a USB flash drive, a removable hard disk, a ROM, a RAM, a magnetic disk, or an optical disc.

## Claims

1. A multi-carrier based transmission method, wherein the method comprises:
obtaining (501), by a first terminal device, first direct link data; and
sending (502), by the first terminal device, the first direct link data and first indication information to a second terminal device on a first transmission carrier, wherein the first indication information is used to indicate whether the first terminal device sends second direct link data on at least one second transmission carrier;
wherein the method further comprises:
receiving, by the first terminal device, carrier configuration information from an access network device, wherein the carrier configuration information comprises a first transmission carrier identifier and at least one second transmission carrier identifier, the first transmission carrier identifier is used to identify the first transmission carrier, the at least one second transmission carrier identifier is used to identify the at least one second transmission carrier, and a transmission priority of the first transmission carrier is higher than a transmission priority of any one of the at least one second transmission carrier, and wherein
transmission carrier identifiers in the carrier configuration information are sorted in descending order of transmission priorities of transmission carriers; or
transmission carrier identifiers in the carrier configuration information are sorted in ascending order of transmission priorities of transmission carriers; or
the carrier configuration information further comprises a first transmission priority identifier and at least one second transmission priority identifier, wherein the first transmission priority identifier corresponds to the first transmission carrier identifier, the at least one second transmission priority identifier corresponds to the at least one second transmission carrier identifier in a one-to-one manner, and a transmission priority corresponding to the first transmission priority identifier is higher than a transmission priority corresponding to any one of the at least one second transmission priority identifier;
and wherein the method further comprises:
sending, by the first terminal device based on the carrier configuration information, the first direct link data on the first transmission carrier whose transmission priority is highest; and
when the first terminal device determines to send the second direct link data on a transmission carrier other than the first transmission carrier, sending, by the first terminal device based on the carrier configuration information, the second direct link data on a second transmission carrier whose transmission priority is lower than the transmission priority of the first transmission carrier.

2. The multi-carrier based transmission method according to claim 1, wherein the sending, by the first terminal device, the first direct data and first indication information to a second terminal device on a first transmission carrier comprises:
if the first direct link data and the first indication information are comprised in a media access control protocol data unit MAC PDU, sending, by the first terminal device, the first direct link data and the first indication information to the second terminal device by sending the MAC PDU on the first transmission carrier; or
if the first indication information is comprised in scheduling assignment SA data corresponding to the first direct link data, and the first direct link data is comprised in a MAC PDU, sending, by the first terminal device, the first direct link data to the second terminal device by sending the MAC PDU on the first transmission carrier, and sending the first indication information to the second terminal device by sending the SA data on the first transmission carrier.

3. The multi-carrier based transmission method according to claim 1 or 2, wherein
the first indication information is a bit string, wherein
the bit string comprises at least one bit, the at least one bit corresponds to the at least one second transmission carrier in a one-to-one manner, and a correspondence between the at least one bit and the at least one second transmission carrier is pre-configured, or a correspondence between the at least one bit and the at least one second transmission carrier is configured in a network, or a correspondence between the at least one bit and the at least one second transmission carrier is protocol-specified; and
information carried in each bit is used to indicate whether the first terminal device sends the second direct link data on a second transmission carrier corresponding to the bit,
or wherein
the first indication information comprises frequency information, wherein
the frequency information is a carrier identifier of the at least one second transmission carrier or an index number corresponding to the at least one transmission carrier, and the frequency information is used to identify the at least one second transmission carrier.

4. The multi-carrier based transmission method according to any one of claims 2 or 3 wherein
the MAC PDU in which the first direct link data is located comprises first service identification information, and a MAC PDU in which the second direct link data is located comprises second service identification information, wherein
the first service identification information is the same as the second service identification information, and the first service identification information and the second service identification information each comprise at least one of the following information: a source address, a target address, a service type identifier, a priority identifier, a direct link bearer identifier, a logical channel identifier, and a stream identifier.

5. The multi-carrier based transmission method according to claim 4, wherein
the carrier configuration information further comprises third service identification information and at least one piece of fourth service identification information, the at least one piece of fourth service identification information corresponds to the at least one second transmission carrier identifier in a one-to-one manner, the third service identifier is used to indicate a service type of direct link data sent on a transmission carrier identified by the first transmission carrier identifier, and each piece of fourth service identification information is used to indicate a service type of direct link data sent on a transmission carrier identified by a second transmission carrier identifier corresponding to the fourth service identification information, wherein
the third service identification information and the fourth service identification information each comprise at least one of the following information: a source address, a target address, a service type identifier, a priority identifier, a direct link bearer identifier, a logical channel identifier, and a stream identifier;
and wherein any one of the at least one piece of fourth service identification information is the same as the third service identification information.

6. A multi-carrier based transmission method, comprising:
receiving (502), by a second terminal device on a first receive carrier, first direct link data and first indication information that are sent by a first terminal device, wherein the first indication information is used to indicate whether the first terminal device sends second direct link data on at least one second receive carrier; and
receiving (503), by the second terminal device, the second direct link data on the at least one second receive carrier according to the first indication information;
wherein the method further comprises:
receiving, by the second terminal device, carrier configuration information from an access network device, wherein the carrier configuration information comprises a first receive carrier identifier and at least one second receive carrier identifier, the first receive carrier identifier is used to identify the first receive carrier, the at least one second receive carrier identifier is used to identify the at least one second receive carrier, and a receiving priority of the first receive carrier is higher than a receiving priority of any one of the at least one second receive carrier, and wherein
receive carrier identifiers in the carrier configuration information are sorted in descending 53 order of receiving priorities of receive carriers; or
receive carrier identifiers in the carrier configuration information are sorted in ascending order of receiving priorities of receive carriers; or
the carrier configuration information further comprises a first receiving priority identifier and at least one second receiving priority identifier, wherein the first receiving priority identifier corresponds to the first receive carrier identifier, the at least one second receiving priority identifier corresponds to the at least one second receive carrier identifier in a one-to-one manner, and a receiving priority corresponding to the first receiving priority identifier is higher than a receiving priority corresponding to any one of the at least one second receiving priority identifier; and wherein the method further comprises:
receiving, by the second terminal device based on the carrier configuration information, the first direct link data and the first indication information on the first receive carrier whose receiving priority is highest; and
after the second terminal device receives the first indication information, receiving, by the second terminal device based on the carrier configuration information and the first indication information, the second direct link data on the at least one second receive carrier whose receiving priority is lower than the receiving priority of the first receive carrier.

7. The multi-carrier based transmission method according to claim 6, wherein the receiving, by a second terminal device on a first receive carrier, first direct link data and first indication information that are sent by a first terminal device comprises:
if the first direct link data and the first indication information are comprised in a media access control protocol data unit MAC PDU, receiving, by the second terminal device, the first direct link data and the first indication information by receiving the MAC PDU on the first receive carrier; or
if the first indication information is comprised in scheduling assignment SA data corresponding to the first direct link data, and the first direct link data is comprised in a MAC PDU, receiving, by the second terminal device, the first direct link data by receiving the MAC PDU on the first receive carrier, and receiving the first indication information by receiving the SA data on the first receive carrier.

8. The multi-carrier based transmission method according to claim 6 or 7, wherein
the first indication information is a bit string, wherein
the bit string comprises at least one bit, the at least one bit corresponds to the at least one second receive carrier in a one-to-one manner, and a correspondence between the at least one bit and the at least one second receive carrier is pre-configured, or a correspondence between the at least one bit and the at least one second receive carrier is configured in a network, or a correspondence between the at least one bit and the at least one second receive carrier is protocol-specified; and
information carried in each bit is used to indicate whether the first terminal device sends the second direct link data on a second receive carrier corresponding to the bit,
or wherein
the first indication information comprises frequency information, wherein
the frequency information is a carrier identifier of the at least one second receive carrier or an index number corresponding to the at least one receive carrier, and the frequency information is used to identify the at least one second receive carrier,

9. The multi-carrier based transmission method according to claim 7 or 8, wherein
the MAC PDU in which the first direct link data is located comprises first service identification information, and a MAC PDU in which the second direct link data is located comprises second service identification information, wherein
the first service identification information is the same as the second service identification information, and the first service identification information and the second service identification information each comprise at least one of the following information: a source address, a target address, a service type identifier, a priority identifier, a direct link bearer identifier, a logical channel identifier, and a stream identifier.

10. The multi-carrier based transmission method according to claim 9, wherein
the carrier configuration information further comprises third service identification information and at least one piece of fourth service identification information, the at least one piece of fourth service identification information corresponds to the at least one receive carrier identifier in a one-to-one manner, the third service identification information is used to indicate a service type of direct link data received on a receive carrier identified by the first receive carrier identifier, and each piece of fourth service identification information is used to indicate a service type of direct link data received on a receive carrier identified by a second receive carrier identifier corresponding to the fourth service identification information, wherein
the third service identification information and the fourth service identification information each comprise at least one of the following information: a source address, a target address, a service type identifier, a priority identifier, a direct link bearer identifier, a logical channel identifier, and a stream identifier,
and wherein any one of the at least one piece of fourth service identification information is the same as the third service identification information.

11. A terminal device, configured to carry on the method of any of claims 1 to 5 or 6 to 10.

12. A computer storage medium comprising instructions which, when executed by a processor, cause the processor to carry out the multi-carrier based transmission method according to any one of claims 1 to 5 or 6 to 10.

## Patentansprüche

1. Mehrträgerbasiertes Übertragungsverfahren, wobei das Verfahren Folgendes umfasst:
Erhalten (501), durch eine erste Endgerätevorrichtung, erster Direktverbindungsdaten; und
Senden (502), durch die erste Endgerätevorrichtung, der ersten Direktverbindungsdaten und erster Indikationsinformationen an eine zweite Endgerätevorrichtung auf einem ersten Übertragungsträger, wobei die ersten Indikationsinformationen dazu verwendet werden, anzugeben, ob die erste Endgerätevorrichtung zweite Direktverbindungsdaten auf mindestens einem zweiten Übertragungsträger sendet;
wobei das Verfahren ferner Folgendes umfasst:
Empfangen, durch die erste Endgerätevorrichtung, von Trägerkonfigurationsinformationen von einer Zugangsnetzwerkvorrichtung, wobei die Trägerkonfigurationsinformationen eine erste Übertragungsträgerkennung und mindestens eine zweite Übertragungsträgerkennung umfassen, wobei die erste Übertragungsträgerkennung zum Identifizieren des ersten Übertragungsträgers verwendet wird, die mindestens eine zweite Übertragungsträgerkennung zum Identifizieren des mindestens einen zweiten Übertragungsträgers verwendet wird und eine Übertragungspriorität des ersten Übertragungsträgers höher als eine Übertragungspriorität eines beliebigen des mindestens einen zweiten Übertragungsträgers ist und wobei
Übertragungsträgerkennungen in den Trägerkonfigurationsinformationen in absteigender Reihenfolge von Übertragungsprioritäten von Übertragungsträgern sortiert sind; oder
Übertragungsträgerkennungen in den Trägerkonfigurationsinformationen in aufsteigender Reihenfolge von Übertragungsprioritäten von Übertragungsträgern sortiert sind; oder
die Trägerkonfigurationsinformationen ferner eine erste Übertragungsprioritätskennung und mindestens eine zweite Übertragungsprioritätskennung umfassen, wobei die erste Übertragungsprioritätskennung der ersten Übertragungsträgerkennung entspricht, die mindestens eine zweite Übertragungsprioritätskennung der mindestens einen zweiten Übertragungsträgerkennung eineindeutig entspricht und eine Übertragungspriorität, die der ersten Übertragungsprioritätskennung entspricht, höher ist als eine Übertragungspriorität, die einer beliebigen der mindestens einen zweiten Übertragungsprioritätskennung entspricht;
und wobei das Verfahren ferner Folgendes umfasst:
Senden, durch die erste Endgerätevorrichtung basierend auf den Trägerkonfigurationsinformationen, der ersten Direktverbindungsdaten auf dem ersten Übertragungsträger, dessen Übertragungspriorität am höchsten ist; und
wenn die erste Endgerätevorrichtung bestimmt, die zweiten Direktverbindungsdaten auf einem Übertragungsträger zu senden, bei dem es sich nicht um den ersten Übertragungsträger handelt, Senden, durch die erste Endgerätevorrichtung basierend auf den Trägerkonfigurationsinformationen, der zweiten Direktverbindungsdaten auf einem zweiten Übertragungsträger, dessen Übertragungspriorität niedriger als die Übertragungspriorität des ersten Übertragungsträgers ist.

2. Mehrträgerbasiertes Übertragungsverfahren nach Anspruch 1, wobei das Senden, durch die erste Endgerätevorrichtung, der ersten Direktdaten und erster Indikationsinformationen an eine zweite Endgerätevorrichtung auf einem ersten Übertragungsträger Folgendes umfasst:
wenn die ersten Direktverbindungsdaten und die ersten Indikationsinformationen in einer Medienzugriffssteuerungsprotokolldateneinheit, MAC-PDU, enthalten sind, Senden, durch die erste Endgerätevorrichtung, der ersten Direktverbindungsdaten und der ersten Indikationsinformationen an die zweite Endgerätevorrichtung durch Senden der MAC-PDU auf dem ersten Übertragungsträger; oder
wenn die ersten Indikationsinformationen in "Scheduling"-Zuweisungs- bzw. SA-Daten, die den ersten Direktverbindungsdaten entsprechen, enthalten sind und die ersten Direktverbindungsdaten in einer MAC-PDU enthalten sind, Senden, durch die erste Endgerätevorrichtung, der ersten Direktverbindungsdaten an die zweite Endgerätevorrichtung durch Senden der MAC-PDU auf dem ersten Übertragungsträger, und Senden der ersten Indikationsinformationen an die zweite Endgerätevorrichtung durch Senden der SA-Daten auf dem ersten Übertragungsträger.

3. Mehrträgerbasiertes Übertragungsverfahren nach Anspruch 1 oder 2, wobei es sich bei den ersten Indikationsinformationen um eine Bitkette handelt, wobei die Bitkette mindestens ein Bit umfasst, das mindestens eine Bit dem mindestens einen zweiten Übertragungsträger eineindeutig entspricht und eine Entsprechung zwischen dem mindestens einen Bit und dem mindestens einen zweiten Übertragungsträger vorkonfiguriert ist oder eine Entsprechung zwischen dem mindestens einen Bit und dem mindestens einen zweiten Übertragungsträger in einem Netzwerk konfiguriert wird oder eine Entsprechung zwischen dem mindestens einen Bit und dem mindestens einen zweiten Übertragungsträger protokollspezifiziert ist; und
in jedem Bit geführte Informationen dazu verwendet werden, anzugeben, ob die erste Endgerätevorrichtung die zweiten Direktverbindungsdaten auf einem zweiten Übertragungsträger entsprechend dem Bit sendet,
oder wobei
die ersten Indikationsinformationen Frequenzinformationen umfassen, wobei es sich bei den Frequenzinformationen um eine Trägerkennung des mindestens einen zweiten Übertragungsträgers oder eine dem mindestens einen Übertragungsträger entsprechende Indexnummer handelt und die Frequenzinformationen zum Identifizieren des mindestens einen zweiten Übertragungsträgers verwendet werden.

4. Mehrträgerbasiertes Übertragungsverfahren nach einem der Ansprüche 2 oder 3, wobei
die MAC-PDU, in der sich die ersten Direktverbindungsdaten befinden, erste Dienstidentifikationsinformationen umfasst und eine MAC-PDU, in der sich die zweiten Direktverbindungsdaten befinden, zweite Dienstidentifikationsinformationen umfasst, wobei
die ersten Dienstidentifikationsinformationen die gleichen wie die zweiten Dienstidentifikationsinformationen sind und die ersten Dienstidentifikationsinformationen und die zweiten Dienstidentifikationsinformationen jeweils mindestens eine der folgenden Informationen umfassen: eine Quellenadresse, eine Zieladresse, eine Dienstartkennung, eine Prioritätskennung, eine Direktverbindungsträgerkennung, eine Logikkanalkennung und eine Stromkennung.

5. Mehrträgerbasiertes Übertragungsverfahren nach Anspruch 4, wobei die Trägerkonfigurationsinformationen ferner dritte Dienstidentifikationsinformationen und mindestens ein Element vierter Dienstidentifikationsinformationen umfassen, wobei das mindestens eine Element vierter Dienstidentifikationsinformationen der mindestens einen zweiten Übertragungsträgerkennung eineindeutig entspricht, die dritte Dienstkennung verwendet wird zum Angeben einer Dienstart von Direktverbindungsdaten, die auf einem Übertragungsträger gesendet werden, der durch die erste Übertragungsträgerkennung identifiziert wird, und jedes Element vierter Dienstidentifikationsinformationen verwendet wird zum Angeben einer Dienstart von Direktverbindungsdaten, die auf einem Übertragungsträger gesendet werden, der durch eine den vierten Dienstidentifikationsinformationen entsprechende zweite Übertragungsträgerkennung identifiziert wird, wobei
die dritten Dienstidentifikationsinformationen und die vierten Dienstidentifikationsinformationen jeweils mindestens eine der folgenden Informationen umfassen: eine Quellenadresse, eine Zieladresse, eine Dienstartkennung, eine Prioritätskennung, eine Direktverbindungsträgerkennung, eine Logikkanalkennung und eine Stromkennung;
und wobei ein beliebiges des mindestens einen Elements vierter Dienstidentifikationsinformationen das gleiche wie die dritten Dienstidentifikationsinformationen ist.

6. Mehrträgerbasiertes Übertragungsverfahren, das Folgendes umfasst:
Empfangen (502), durch eine zweite Endgerätevorrichtung auf einem ersten Empfangsträger, erster Direktverbindungsdaten und erster Indikationsinformationen, die durch eine erste Endgerätevorrichtung gesendet werden, wobei die ersten Indikationsinformationen dazu verwendet werden, anzugeben, ob die erste Endgerätevorrichtung zweite Direktverbindungsdaten auf mindestens einem zweiten Empfangsträger sendet; und
Empfangen (503), durch die zweite Endgerätevorrichtung, der zweiten Direktverbindungsdaten auf dem mindestens einen Empfangsträger gemäß den ersten Indikationsinformationen;
wobei das Verfahren ferner Folgendes umfasst:
Empfangen, durch die zweite Endgerätevorrichtung, von Trägerkonfigurationsinformationen von einer Zugangsnetzwerkvorrichtung, wobei die Trägerkonfigurationsinformationen eine erste Empfangsträgerkennung und mindestens eine zweite Empfangsträgerkennung umfassen, wobei die erste Empfangsträgerkennung zum Identifizieren des ersten Empfangsträgers verwendet wird, die mindestens eine zweite Empfangsträgerkennung zum Identifizieren des mindestens einen zweiten Empfangsträgers verwendet wird und eine Empfangspriorität des ersten Empfangsträgers höher als eine Empfangspriorität eines beliebigen des mindestens einen zweiten Empfangsträgers ist,
und wobei
Empfangsträgerkennungen in den Trägerkonfigurationsinformationen in absteigender Reihenfolge von Empfangsprioritäten von Empfangsträgern sortiert sind; oder Empfangsträgerkennungen in den Trägerkonfigurationsinformationen in aufsteigender Reihenfolge von Empfangsprioritäten von Empfangsträgern sortiert sind; oder
die Trägerkonfigurationsinformationen ferner eine erste Empfangsprioritätskennung und mindestens eine zweite Empfangsprioritätskennung umfassen, wobei die erste Empfangsprioritätskennung der ersten Empfangsträgerkennung entspricht, die mindestens eine zweite Empfangsprioritätskennung der mindestens einen zweiten Empfangsträgerkennung eineindeutig entspricht und eine Empfangspriorität, die der ersten Empfangsprioritätskennung entspricht, höher ist als eine Empfangspriorität,
die einer beliebigen der mindestens einen zweiten Empfangsprioritätskennung entspricht;
und wobei das Verfahren ferner Folgendes umfasst:
Empfangen, durch die zweite Endgerätevorrichtung basierend auf den Trägerkonfigurationsinformationen, der ersten Direktverbindungsdaten und der ersten Indikationsinformationen auf dem ersten Empfangsträger, dessen Empfangspriorität am höchsten ist; und
nachdem die zweite Endgerätevorrichtung die ersten Indikationsinformationen empfängt, Empfangen, durch die zweite Endgerätevorrichtung basierend auf den Trägerkonfigurationsinformationen und den ersten Indikationsinformationen, der zweiten Direktverbindungsdaten auf dem mindestens einen zweiten Empfangsträger, dessen Empfangspriorität niedriger als die Empfangspriorität des ersten Empfangsträgers ist.

7. Mehrträgerbasiertes Übertragungsverfahren nach Anspruch 6, wobei das Empfangen, durch eine zweite Endgerätevorrichtung auf einem ersten Empfangsträger, erster Direktverbindungsdaten und erster Indikationsinformationen, die durch eine erste Endgerätevorrichtung gesendet werden, Folgendes umfasst:
wenn die ersten Direktverbindungsdaten und die ersten Indikationsinformationen in einer Medienzugriffssteuerungsprotokolldateneinheit, MAC-PDU, enthalten sind, Empfangen, durch die zweite Endgerätevorrichtung, der ersten Direktverbindungsdaten und der ersten Indikationsinformationen durch Empfangen der MAC-PDU auf dem ersten Übertragungsträger; oder
wenn die ersten Indikationsinformationen in "Scheduling"-Zuweisungs- bzw. SA-Daten, die den ersten Direktverbindungsdaten entsprechen, enthalten sind und die ersten Direktverbindungsdaten in einer MAC-PDU enthalten sind, Empfangen, durch die zweite Endgerätevorrichtung, der ersten Direktverbindungsdaten durch Empfangen der MAC-PDU auf dem ersten Empfangsträger, und Empfangen der ersten Indikationsinformationen durch Empfangen der SA-Daten auf dem ersten Empfangsträger.

8. Mehrträgerbasiertes Übertragungsverfahren nach Anspruch 6 oder 7, wobei es sich bei den ersten Indikationsinformationen um eine Bitkette handelt, wobei die Bitkette mindestens ein Bit umfasst, das mindestens eine Bit dem mindestens einen zweiten Empfangsträger eineindeutig entspricht und eine Entsprechung zwischen dem mindestens einen Bit und dem mindestens einen zweiten Empfangsträger vorkonfiguriert ist oder eine Entsprechung zwischen dem mindestens einen Bit und dem mindestens einen zweiten Empfangsträger in einem Netzwerk konfiguriert wird oder eine Entsprechung zwischen dem mindestens einen Bit und dem mindestens einen zweiten Empfangsträger protokollspezifiziert ist; und in jedem Bit geführte Informationen dazu verwendet werden, anzugeben, ob die erste Endgerätevorrichtung die zweiten Direktverbindungsdaten auf einem zweiten Empfangsträger entsprechend dem Bit sendet,
oder wobei
die ersten Indikationsinformationen Frequenzinformationen umfassen, wobei es sich bei den Frequenzinformationen um eine Trägerkennung des mindestens einen zweiten Empfangsträgers oder eine dem mindestens einen Empfangsträger entsprechende Indexnummer handelt und die Frequenzinformationen zum Identifizieren des mindestens einen zweiten Empfangsträgers verwendet werden.

9. Mehrträgerbasiertes Übertragungsverfahren nach Anspruch 7 oder 8, wobei die MAC-PDU, in der sich die ersten Direktverbindungsdaten befinden, erste Dienstidentifikationsinformationen umfasst und eine MAC-PDU, in der sich die zweiten Direktverbindungsdaten befinden, zweite Dienstidentifikationsinformationen umfasst, wobei
die ersten Dienstidentifikationsinformationen die gleichen wie die zweiten Dienstidentifikationsinformationen sind und die ersten Dienstidentifikationsinformationen und die zweiten Dienstidentifikationsinformationen jeweils mindestens eine der folgenden Informationen umfassen: eine Quellenadresse, eine Zieladresse, eine Dienstartkennung, eine Prioritätskennung, eine Direktverbindungsträgerkennung, eine Logikkanalkennung und eine Stromkennung.

10. Mehrträgerbasiertes Übertragungsverfahren nach Anspruch 9, wobei die Trägerkonfigurationsinformationen ferner dritte Dienstidentifikationsinformationen und mindestens ein Element vierter Dienstidentifikationsinformationen umfassen, wobei das mindestens eine Element vierter Dienstidentifikationsinformationen der mindestens einen Empfangsträgerkennung eineindeutig entspricht, die dritten Dienstidentifikationsinformationen verwendet werden zum Angeben einer Dienstart von Direktverbindungsdaten, die auf einem Empfangsträger empfangen werden, der durch die erste Empfangsträgerkennung identifiziert wird, und jedes Element vierter Dienstidentifikationsinformationen verwendet wird zum Angeben einer Dienstart von Direktverbindungsdaten, die auf einem Empfangsträger empfangen werden, der durch eine den vierten Dienstidentifikationsinformationen entsprechende zweite Empfangsträgerkennung identifiziert wird, wobei
die dritten Dienstidentifikationsinformationen und die vierten Dienstidentifikationsinformationen jeweils mindestens eine der folgenden Informationen umfassen: eine Quellenadresse, eine Zieladresse, eine Dienstartkennung, eine Prioritätskennung, eine Direktverbindungsträgerkennung, eine Logikkanalkennung und eine Stromkennung,
und wobei ein beliebiges des mindestens einen Elements vierter Dienstidentifikationsinformationen das gleiche wie die dritten Dienstidentifikationsinformationen ist.

11. Endgerätevorrichtung, ausgelegt zum Ausführen des Verfahrens nach einem der Ansprüche 1 bis 5 oder 6 bis 10.

12. Computerspeichermedium, das Anweisungen umfasst, die bei Ausführung durch einen Prozessor bewirken, dass der Prozessor das Mehrträgerbasierte Übertragungsverfahren nach einem der Ansprüche 1 bis 5 oder 6 bis 10 ausführt.

## Revendications

1. Procédé de transmission basé sur de multiples porteuses, le procédé comprenant les étapes consistant à :
obtenir (501), par un premier dispositif terminal, des premières données de liaison directe ; et
envoyer (502), par le premier dispositif terminal, les premières données de liaison directe et une première information d'indication à un second dispositif terminal sur une première porteuse de transmission, la première information d'indication étant utilisée pour indiquer si le premier dispositif terminal envoie des secondes données de liaison directe sur au moins une seconde porteuse de transmission ;
le procédé comprenant en outre l'étape consistant à :
recevoir, par le premier dispositif terminal, une information de configuration de porteuse en provenance d'un dispositif de réseau d'accès, l'information de configuration de porteuse comprenant un premier identifiant de porteuse de transmission et au moins un second identifiant de porteuse de transmission, le premier identifiant de porteuse de transmission étant utilisé pour identifier la première porteuse de transmission, l'au moins un second identifiant de porteuse de transmission étant utilisé pour identifier l'au moins une seconde porteuse de transmission, et une priorité de transmission de la première porteuse de transmission étant supérieure à une priorité de transmission de l'une quelconque de l'au moins une seconde porteuse de transmission, et dans lequel :
des identifiants de porteuse de transmission dans l'information de configuration de porteuse sont triés par ordre décroissant de priorités de transmission de porteuses de transmission ; ou
des identifiants de porteuse de transmission dans l'information de configuration de porteuse sont triés par ordre croissant de priorités de transmission de porteuses de transmission ; ou
l'information de configuration de porteuse comprend en outre un premier identifiant de priorité de transmission et au moins un second identifiant de priorité de transmission, le premier identifiant de priorité de transmission correspondant au premier identifiant de porteuse de transmission, l'au moins un second identifiant de priorité de transmission correspondant à l'au moins un second identifiant de porteuse de transmission de façon biunivoque, et une priorité de transmission qui correspond au premier identifiant de priorité de transmission étant supérieure à une priorité de transmission qui correspond à l'un quelconque de l'au moins un second identifiant de priorité de transmission ;
et le procédé comprenant en outre les étapes consistant à :
envoyer, par le premier dispositif terminal sur la base de l'information de configuration de porteuse, les premières données de liaison directe sur la première porteuse de transmission dont la priorité de transmission est maximale ; et
quand le premier dispositif terminal détermine qu'il faut envoyer les secondes données de liaison directe sur une porteuse de transmission autre que la première porteuse de transmission, envoyer, par le premier dispositif terminal sur la base de l'information de configuration de porteuse, les secondes données de liaison directe sur une seconde porteuse de transmission dont la priorité de transmission est inférieure à la priorité de transmission de la première porteuse de transmission.

2. Procédé de transmission basé sur de multiples porteuses selon la revendication 1, dans lequel l'envoi, par le premier dispositif terminal, des premières données de liaison directe et d'une première information d'indication à un second dispositif terminal sur une première porteuse de transmission comprend l'étape consistant à :
si les premières données de liaison directe et la première information d'indication sont comprises dans une unité de données de protocole de contrôle d'accès au support (PDU MAC), envoyer, par le premier dispositif terminal, les premières données de liaison directe et la première information d'indication au second dispositif terminal en envoyant la PDU MAC sur la première porteuse de transmission ; ou
si la première information d'indication est comprise dans des données d'affectation de planification (SA) qui correspondent aux premières données de liaison directe et si les premières données de liaison directe sont comprises dans une PDU MAC, envoyer, par le premier dispositif terminal, les premières données de liaison directe au second dispositif terminal en envoyant la PDU MAC sur la première porteuse de transmission et envoyer la première information d'indication au second dispositif terminal en envoyant les données SA sur la première porteuse de transmission.

3. Procédé de transmission basé sur de multiples porteuses selon la revendication 1 ou 2, dans lequel :
la première information d'indication est une chaîne de bits,
la chaîne de bits comprenant au moins un bit, l'au moins un bit correspondant à l'au moins une seconde porteuse de transmission de façon biunivoque, et une correspondance entre l'au moins un bit et l'au moins une seconde porteuse de transmission étant préconfigurée ou une correspondance entre l'au moins un bit et l'au moins une seconde porteuse de transmission étant configurée dans un réseau ou une correspondance entre l'au moins un bit et l'au moins une seconde porteuse de transmission étant spécifiée par protocole ; et
une information transportée dans chaque bit étant utilisée pour indiquer si le premier dispositif terminal envoie les secondes données de liaison directe sur une seconde porteuse de transmission qui correspond au bit,
ou dans lequel :
la première information d'indication comprend une information de fréquence,
l'information de fréquence étant un identifiant de porteuse de l'au moins une seconde porteuse de transmission ou un numéro d'indice qui correspond à l'au moins une porteuse de transmission, et l'information de fréquence étant utilisée pour identifier l'au moins une seconde porteuse de transmission.

4. Procédé de transmission basé sur de multiples porteuses selon l'une quelconque des revendications 2 et 3, dans lequel la PDU MAC où se trouvent les premières données de liaison directe comprend une première information d'identification de service, et une PDU MAC où se trouvent les secondes données de liaison directe comprend une deuxième information d'identification de service,
la première information d'identification de service étant la même que la deuxième information d'identification de service, et la première information d'identification de service et la deuxième information d'identification de service comprenant chacune au moins une des informations suivantes : une adresse source, une adresse cible, un identifiant de type de service, un identifiant de priorité, un identifiant de porteuse de liaison directe, un identifiant de canal logique et un identifiant de flux.

5. Procédé de transmission basé sur de multiples porteuses selon la revendication 4, dans lequel :
l'information de configuration de porteuse comprend en outre une troisième information d'identification de service et au moins un élément d'une quatrième information d'identification de service, l'au moins un élément d'une quatrième information d'identification de service correspond à l'au moins un second identifiant de porteuse de transmission de façon biunivoque, le troisième identifiant de service est utilisé pour indiquer un type de service de données de liaison directe envoyées sur une porteuse de transmission identifiée par le premier identifiant de porteuse de transmission, et chaque élément d'une quatrième information d'identification de service est utilisé pour indiquer un type de service de données de liaison directe envoyées sur une porteuse de transmission identifiée par un second identifiant de porteuse de transmission qui correspond à la quatrième information d'identification de service,
la troisième information d'identification de service et la quatrième information d'identification de service comprenant chacune au moins une des informations suivantes : une adresse source, une adresse cible, un identifiant de type de service, un identifiant de priorité, un identifiant de porteuse de liaison directe, un identifiant de canal logique et un identifiant de flux, et l'un quelconque de l'au moins un élément d'une quatrième information d'identification de service étant le même que la troisième information d'identification de service.

6. Procédé de transmission basé sur de multiples porteuses, comprenant les étapes consistant à :
recevoir (502), par un second dispositif terminal sur une première porteuse de réception, des premières données de liaison directe et une première information d'indication qui sont envoyées par un premier dispositif terminal, la première information d'indication étant utilisée pour indiquer si le premier dispositif terminal envoie des secondes données de liaison directe sur au moins une seconde porteuse de réception ; et
recevoir (503), par le second dispositif terminal, les secondes données de liaison directe sur l'au moins une seconde porteuse de réception selon la première information d'indication ;
le procédé comprenant en outre l'étape consistant à :
recevoir, par le second dispositif terminal, une information de configuration de porteuse en provenance d'un dispositif de réseau d'accès, l'information de configuration de porteuse comprenant un premier identifiant de porteuse de réception et au moins un second identifiant de porteuse de réception, le premier identifiant de porteuse de réception étant utilisé pour identifier la première porteuse de réception, l'au moins un second identifiant de porteuse de réception étant utilisé pour identifier l'au moins une seconde porteuse de réception, et une priorité de réception de la première porteuse de réception étant supérieure à une priorité de réception de l'une quelconque de l'au moins une seconde porteuse de réception,
et dans lequel :
des identifiants de porteuse de réception dans l'information de configuration de porteuse sont triés par ordre décroissant de priorités de réception de porteuses de réception ; ou
des identifiants de porteuse de réception dans l'information de configuration de porteuse sont triés par ordre croissant de priorités de réception de porteuses de réception ; ou
l'information de configuration de porteuse comprend en outre un premier identifiant de priorité de réception et au moins un second identifiant de priorité de réception, le premier identifiant de priorité de réception correspondant au premier identifiant de porteuse de réception, l'au moins un second identifiant de priorité de réception correspondant à l'au moins un second identifiant de porteuse de réception de façon biunivoque, et une priorité de réception qui correspond au premier identifiant de priorité de réception étant supérieure à une priorité de réception qui correspond à l'un quelconque de l'au moins un second identifiant de priorité de réception ;
et le procédé comprenant en outre les étapes consistant à :
recevoir, par le second dispositif terminal sur la base de l'information de configuration de porteuse, les premières données de liaison directe et la première information d'indication sur la première porteuse de réception dont la priorité de réception est maximale ; et
après la réception de la première information d'indication par le second dispositif terminal, recevoir, par le second dispositif terminal sur la base de l'information de configuration de porteuse et de la première information d'indication, les secondes données de liaison directe sur l'au moins seconde porteuse de réception dont la priorité de réception est inférieure à la priorité de réception de la première porteuse de réception.

7. Procédé de transmission basé sur de multiples porteuses selon la revendication 6, dans lequel la réception, par un second dispositif terminal sur une première porteuse de réception, de premières données de liaison directe et d'une première information d'indication qui sont envoyées par un premier dispositif terminal comprend l'étape consistant à :
si les premières données de liaison directe et la première information d'indication sont comprises dans une unité de données de protocole de contrôle d'accès au support (PDU MAC), recevoir, par le second dispositif terminal, les premières données de liaison directe et la première information d'indication en recevant la PDU MAC sur la première porteuse de réception ; ou
si la première information d'indication est comprise dans des données d'affectation de planification (SA) qui correspondent aux premières données de liaison directe et si les premières données de liaison directe sont comprises dans une PDU MAC, recevoir, par le second dispositif terminal, les premières données de liaison directe en recevant la PDU MAC sur la première porteuse de réception et recevoir la première information d'indication en recevant les données SA sur la première porteuse de réception.

8. Procédé de transmission basé sur de multiples porteuses selon la revendication 6 ou 7, dans lequel :
la première information d'indication est une chaîne de bits,
la chaîne de bits comprenant au moins un bit, l'au moins un bit correspondant à l'au moins une seconde porteuse de réception de façon biunivoque, et une correspondance entre l'au moins un bit et l'au moins une seconde porteuse de réception étant préconfigurée ou une correspondance entre l'au moins un bit et l'au moins une seconde porteuse de réception étant configurée dans un réseau ou une correspondance entre l'au moins un bit et l'au moins une seconde porteuse de réception étant spécifiée par protocole ; et
une information transportée dans chaque bit étant utilisée pour indiquer si le premier dispositif terminal envoie les secondes données de liaison directe sur une seconde porteuse de réception qui correspond au bit,
ou dans lequel :
la première information d'indication comprend une information de fréquence,
l'information de fréquence étant un identifiant de porteuse de l'au moins une seconde porteuse de réception ou un numéro d'indice qui correspond à l'au moins une porteuse de réception, et l'information de fréquence étant utilisée pour identifier l'au moins une seconde porteuse de réception.

9. Procédé de transmission basé sur de multiples porteuses selon la revendication 7 ou 8, dans lequel :
la PDU MAC où se trouvent les premières données de liaison directe comprend une première information d'identification de service, et une PDU MAC où se trouvent les secondes données de liaison directe comprend une deuxième information d'identification de service,
la première information d'identification de service étant la même que la deuxième information d'identification de service, et la première information d'identification de service et la deuxième information d'identification de service comprenant chacune au moins une des informations suivantes : une adresse source, une adresse cible, un identifiant de type de service, un identifiant de priorité, un identifiant de porteuse de liaison directe, un identifiant de canal logique et un identifiant de flux.

10. Procédé de transmission basé sur de multiples porteuses selon la revendication 9, dans lequel :
l'information de configuration de porteuse comprend en outre une troisième information d'identification de service et au moins un élément d'une quatrième information d'identification de service, l'au moins un élément d'une quatrième information d'identification de service correspond à l'au moins un identifiant de porteuse de réception de façon biunivoque, la troisième information d'identification de service est utilisée pour indiquer un type de service de données de liaison directe reçues sur une porteuse de réception identifiée par le premier identifiant de porteuse de réception, et chaque élément d'une quatrième information d'identification de service est utilisé pour indiquer un type de service de données de liaison directe reçues sur une porteuse de réception identifiée par un second identifiant de porteuse de réception qui correspond à la quatrième information d'identification de service,
la troisième information d'identification de service et la quatrième information d'identification de service comprenant chacune au moins une des informations suivantes : une adresse source, une adresse cible, un identifiant de type de service, un identifiant de priorité, un identifiant de porteuse de liaison directe, un identifiant de canal logique et un identifiant de flux, et l'un quelconque de l'au moins un élément d'une quatrième information d'identification de service étant le même que la troisième information d'identification de service.

11. Dispositif terminal, configuré pour réaliser le procédé selon l'une quelconque des revendications 1 à 5 et 6 à 10.

12. Support de stockage informatique, comprenant des instructions qui, lorsqu'elles sont exécutées par un processeur, amènent le processeur à réaliser le procédé de transmission basé sur de multiples porteuses selon l'une quelconque des revendications 1 à 5 et 6 à 10.
